(19) **Europäisches Patentamt / European Patent Office / Office européen des brevets**

(11) **EP 2 941 876 B1**

(12) **EUROPEAN PATENT SPECIFICATION**

(45) Date of publication and mention of the grant of the patent:
**25.05.2016  Bulletin 2016/21**

(51) Int Cl.:
***H04N 19/33*** *(2014.01)*    ***H04N 19/423*** *(2014.01)*
***H04N 19/436*** *(2014.01)*    ***H04N 19/597*** *(2014.01)*

(21) Application number: **14702663.7**

(22) Date of filing: **03.01.2014**

(86) International application number:
**PCT/US2014/010190**

(87) International publication number:
**WO 2014/107583 (10.07.2014 Gazette 2014/28)**

(54) **MULTI-RESOLUTION DECODED PICTURE BUFFER MANAGEMENT FOR MULTI-LAYER CODING**

PUFFERVERWALTUNG DECODIERTER BILDER MIT MEHRFACHER AUFLÖSUNG FÜR MEHRSCHICHTIGE CODIERUNG

GESTION DE MÉMOIRE TAMPON D'IMAGES DÉCODÉES À RÉSOLUTIONS MULTIPLES DANS LE CADRE D'UN CODAGE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **04.01.2013  US 201361749105 P**
**02.01.2014  US 201414146507**

(43) Date of publication of application:
**11.11.2015  Bulletin 2015/46**

(73) Proprietor: **Qualcomm Incorporated**
**San Diego, CA 92121-1714 (US)**

(72) Inventors:
• **CHEN, Ying**
**San Diego, CA 92121-1714 (US)**
• **WANG, Ye-Kui**
**San Diego, CA 92121-1714 (US)**

(74) Representative: **Loveless, Ian Mark**
**Reddie & Grose LLP**
**16 Theobalds Road**
**London WC1X 8PL (GB)**

(56) References cited:
**WO-A1-2008/084443    US-A1- 2006 104 356**
**US-A1- 2007 086 521    US-A1- 2012 230 401**
**US-A1- 2012 230 409**

• **R. SJOBERG ET AL: "Overview of HEVC high-level syntax and reference picture management", IEEE TRANSACTIONS ON CIRCUITS AND SYSTEMS FOR VIDEO TECHNOLOGY, 1 January 2012 (2012-01-01), pages 1-1, XP055045360, ISSN: 1051-8215, DOI: 10.1109/TCSVT.2012.2223052**
• **Y-K WANG ET AL: "AHG21: On DPB management", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G314, 9 November 2011 (2011-11-09), XP030110298,**

EP 2 941 876 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This disclosure relates to techniques for video coding, and more specifically to techniques for multi-layer video coding.

**BACKGROUND**

Digital video capabilities can be incorporated into a wide range of devices, including digital televisions, digital direct broadcast systems, wireless broadcast systems, personal digital assistants (PDAs), laptop or desktop computers, digital cameras, digital recording devices, digital media players, video gaming devices, video game consoles, cellular or satellite radio telephones, video teleconferencing devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards, to transmit, receive and store digital video information more efficiently.

WO 2008/084443 describes various ways of decoding video data to produce decoding layer components.

Extensions of some of the aforementioned standards, including H.264/AVC, provide techniques for multi-layer video coding. Multi-layer video coding techniques may include scalable video coding techniques, multi-view video coding techniques, and multi-view plus depth video coding techniques. In order to produce stereo or three-dimensional ("3D") video, for example, techniques for multiview coding have been proposed for use in AVC, with the scalable video coding (SVC) standard (which is the scalable extension to H.264/AVC), and the multi-view video coding (MVC) standard (which has become the multiview extension to H.264/AVC).

Typically, stereo video is achieved using two views, e.g., a left view and a right view. A picture of the left view can be displayed substantially simultaneously with a picture of the right view to achieve a three-dimensional video effect. For example, a user may wear polarized, passive glasses that filter the left view from the right view. Alternatively, the pictures of the two views may be shown in rapid succession, and the user may wear active glasses that rapidly shutter the left and right eyes at the same frequency, but with a 90 degree shift in phase.

**SUMMARY**

In general, this disclosure describes techniques for multi-layer video coding. In particular, this disclosure is related to decoded picture buffer (DPB) management for multi-layer video coding.

In one or more examples of the disclosure, a video coder (e.g., a video encoder or a video decoder) may be configured to perform the following methods.

In one example of the disclosure, a method of coding video data comprises decoding video data to produce a plurality of decoded layer components, storing the decoded layer components in one or more sub-units of a DPB, and performing a DPB management process on the one or more sub-units, wherein the DPB management process is managed separately for each of the one or more sub-units.

In another example of the disclosure, an apparatus configured to code video data comprises a video coder configured to decode video data to produce a plurality of decoded layer components, store the decoded layer components in one or more sub-units of a DPB, and perform a DPB management process on the one or more sub-units, wherein the DPB management process is managed separately for each of the one or more sub-units.

In another example of the disclosure, an apparatus configured to code video data comprises means for decoding video data to produce a plurality of decoded layer components, means for storing the decoded layer components in one or more sub-units of a DPB, and means for performing a DPB management process on the one or more sub-units, wherein the DPB management process is managed separately for each of the one or more sub-units.

In another example, this disclosure describes a computer-readable storage medium storing instructions that, when executed, cause one or more processors of a device configured to code video data to decode video data to produce a plurality of decoded layer components, store the decoded layer components in one or more sub-units of a DPB, and perform a DPB management process on the one or more sub-units, wherein the DPB management process is managed separately for each of the one or more sub-units.

The details of one or more examples are set forth in the accompanying drawings and the description below. Other features, objects, and advantages will be apparent from the description and drawings, and from the claims.

**BRIEF DESCRIPTION OF DRAWINGS**

FIG. 1 is a block diagram illustrating an example video encoding and decoding system that may utilize the techniques described in this disclosure.

FIG. 2 is a conceptual diagram illustrating an example multiview decoding order.

FIG. 3 is a conceptual diagram illustrating an example prediction structure for multiview coding.

FIG. 4 is a conceptual diagram illustrating example scalable video coding layers.

FIG. 5 is a block diagram illustrating an example video encoder that may implement the techniques described in this disclosure.

FIG. 6 is a block diagram illustrating an example video decoder that may implement the techniques described in this disclosure.

FIG. 7 is a conceptual diagram showing an example DPB according to a first example of the disclosure.

FIG. 8 is a conceptual diagram showing an example DPB according to a second example of the disclosure.

FIG. 9 is a conceptual diagram showing an example DPB according to a third example of the disclosure.

FIG. 10 is a conceptual diagram showing an example DPB according to a fourth example of the disclosure.

FIG. 11 is a flowchart showing an example method according to the techniques of this disclosure.

**DETAILED DESCRIPTION**

In general, this disclosure describes techniques for the management of decoded pictures in multi-layer video coding, wherein different layers may have different spatial resolutions. In the context of this disclosure, a layer may be a layer in scalable video coding process (e.g., H.264/SVC or scalable extensions of the emerging high efficiency video coding (HEVC) standard), a texture view in multi-view or 3D video coding, or a depth view in 3D video coding. As another example, a layer may correspond to a single view that includes both texture view components and depth view components. Thus, the term "layer" may generally be used in this disclosure to refer to a layer in the sense of SVC or a view in the sense of MVC. The techniques of this disclosure may apply to any such video coding scenarios, including multiview extensions, 3D video extensions, and scalable extensions of HEVC and H.264/AVC.

The techniques described below may be applied to scalable, multiview and 3D video coding based on advanced codecs, including the coding of two or more views of a picture with depth maps. Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC), including its Scalable Video Coding (SVC) and Multiview Video Coding (MVC) extensions. In addition, a new video coding standard, namely the High-Efficiency Video Coding (HEVC), is currently being developed by the Joint Collaboration Team on Video Coding (JCT-VC) of ITU-T Video Coding Experts Group (VCEG) and ISO/IEC Motion Picture Experts Group (MPEG). A recent WD of HEVC is described in JCTVC-K1003, "High Efficiency Video Coding (HEVC) text specification draft 9," 11th Meeting: Shanghai, CN, 10-19 October 2012, and as of December 17, 2012, is available for download at http://phenix.intevry.fr/ict/doc_end_user/documents/11_Shanghai/wg11/JCTVC-K1003-v12.zip, the entire content of which is incorporated herein by reference.

A more recent draft of HEVC is described in ITU-T H.265, SERIES H: AUDIOVISUAL AND MULTIMEDIA SYSTEMS, Infrastructure of Audiovisual Services-Coding of Moving Video, "High Efficiency Video Coding," April 2013 (hereinafter, "HEVC"). HEVC is incorporated by reference herein in its entirety. Various extensions to HEVC have been proposed. One such extension is the HEVC Range Extension, described in "High Efficiency Video Coding (HEVC) Range Extensions text specification: Draft 4," JCTVC-N1005_v1, April 2013 (hereinafter, "JCTVC-N1005"). A recent Working Draft (WD) of scalable HEVC (SHEVC), entitled "High efficiency video coding (HEVC) scalable extension draft 3," Joint Collaborative Team on Video Coding (JCT-VC) of ITU-T SG 16 WP 3 and ISO/IEC JTC 1/SC 29/WG 11, 14th Meeting: Vienna, AT, 25 July - 2 Aug. 2013, and referred to as SHEVC WD3 hereinafter, is available from http://phenix.it-sudparis.eu/jct/doc_end_user/documents/14_Vienna/wg11/JCTVC-N1008-v3.zip, which is incorporated be reference herein in its entirety.

Current solutions for decoded picture buffer (DPB) management are only directed to situations where different layers with the same resolution are stored. That is, current techniques for DPB management assume that each layer includes the same number of pixels (i.e., resolution), resulting in inefficiencies when layers have a different number of pixels. In view of this drawback, this disclosure describes various methods and techniques for DPB management when multiple decoded layer components with different resolutions need to be stored.

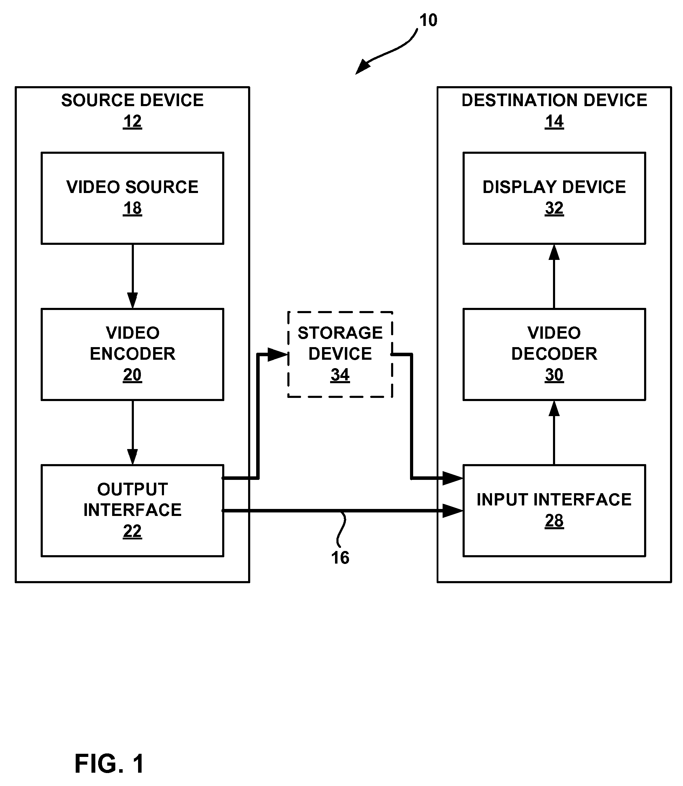

FIG. 1 is a block diagram illustrating an example video encoding and decoding system 10 that may utilize the techniques for decoded picture buffer management in multi-layer video coding described in this disclosure. As shown in FIG. 1, system 10 includes a source device 12 that generates encoded video data to be decoded at a later time by a destination device 14. Source device 12 and destination device 14 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming devices, or the like. In some cases, source device 12 and destination device 14 may be equipped for wireless communication.

Destination device 14 may receive the encoded video data to be decoded via a link 16. Link 16 may comprise any type of medium or device capable of moving the encoded video data from source device 12 to destination device 14. In one example, link 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

Alternatively, encoded data may be output from output interface 22 to a storage device 34. Similarly, encoded data may be accessed from storage device 34 by input interface. Storage device 34 may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, storage device 34 may correspond to a file server or another intermediate storage device that may hold the encoded video generated by source device 12. Destination device 14 may access stored video data from storage device 34 via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from storage device 34 may be a streaming transmission, a download transmission, or a combination of both.

The techniques of this disclosure for decoded picture buffer management in multi-layer video decoding are not necessarily limited to wireless applications or settings. The techniques may be applied to video coding in support of any of a variety of multimedia applications, such as over-the-air television broadcasts, cable television transmissions, satellite television transmissions, streaming video transmissions, e.g., via the Internet, encoding of digital video for storage on a data storage medium, decoding of digital video stored on a data storage medium, or other applications. In some examples, system 10 may be configured to support one-way or two-way video transmission to support applications such as video streaming, video playback, video broadcasting, and/or video telephony.

In the example of FIG. 1, source device 12 includes a video source 18, video encoder 20 and an output interface 22. In some cases, output interface 22 may include a modulator/demodulator (modem) and/or a transmitter. In source device 12, video source 18 may include a source such as a video capture device, e.g., a video camera, a video archive containing previously captured video, a video feed interface to receive video from a video content provider, and/or a computer graphics system for generating computer graphics data as the source video, or a combination of such sources. As one example, if video source 18 is a video camera, source device 12 and destination device 14 may form so-called camera phones or video phones. However, the techniques described in this disclosure may be applicable to video coding in general, and may be applied to wireless and/or wired applications.

The captured, pre-captured, or computer-generated video may be encoded by video encoder 20. The encoded video data may be transmitted directly to destination device 14 via output interface 22 of source device 12. The encoded video data may also (or alternatively) be stored onto storage device 34 for later access by destination device 14 or other devices, for decoding and/or playback.

Destination device 14 includes an input interface 28, a video decoder 30, and a display device 32. In some cases, input interface 28 may include a receiver and/or a modem. Input interface 28 of destination device 14 receives the encoded video data over link 16. The encoded video data communicated over link 16, or provided on storage device 34, may include a variety of syntax elements generated by video encoder 20 for use by a video decoder, such as video decoder 30, in decoding the video data. Such syntax elements may be included with the encoded video data transmitted on a communication medium, stored on a storage medium, or stored a file server.

Display device 32 may be integrated with, or external to, destination device 14. In some examples, destination device 14 may include an integrated display device and also be configured to interface with an external display device. In other examples, destination device 14 may be a display device. In general, display device 32 displays the decoded video data to a user, and may comprise any of a variety of display devices such as a liquid crystal display (LCD), a plasma display, an organic light emitting diode (OLED) display, or another type of display device.

Video encoder 20 and video decoder 30 may operate according to a video compression standard, such as the High Efficiency Video Coding (HEVC) standard presently under development, and may conform to the HEVC Test Model (HM). In particular, in some examples, video encoder 20 and video decoder may operate according to extensions of HEVC that support multiview, or multiview plus depth video coding. In other examples, video encoder 20 and video decoder 30 may operate according to other proprietary or industry standards, such as the ITU-T H.264 standard, alternatively referred to as MPEG-4, Part 10, Advanced Video Coding (AVC), or extensions of such standards, including H.264/SVC. The techniques of this disclosure, however, are not limited to any particular coding standard. Other examples of video compression standards include MPEG-2 and ITU-T H.263. In particular, in accordance with techniques of this disclosure, video encoder 20 and video decoder 30 may operate according to a video coding standard capable of 3DV and/or multiview encoding (e.g., 3D-HEVC, H.264/MVC, etc.).

Although not shown in FIG. 1, in some aspects, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, in some examples, MUX-DEMUX units may conform to the ITU H.223 multiplexer protocol, or other protocols such as the user datagram protocol (UDP).

Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device.

The following section of the disclosure will provide a background of the HEVC standard. The HEVC standardization efforts were based on an evolving model of a video coding device referred to as the HEVC Test Model (HM). The HM presumes several additional capabilities of video coding devices relative to existing devices according to, e.g., ITU-T H.264/AVC. For example, whereas H.264 provides nine intra-prediction encoding modes, the HM may provide as many as thirty-three intra-prediction encoding modes.

In general, the working model of the HM describes that a video frame or picture may be divided into a sequence of treeblocks or largest coding units (LCU) that include both luma and chroma samples. A treeblock has a similar purpose as a macroblock of the H.264 standard. A slice includes a number of consecutive treeblocks in coding order. A video frame or picture may be partitioned into one or more slices. Each treeblock may be split into coding units (CUs) according to a quadtree. For example, a treeblock, as a root node of the quadtree, may be split into four child nodes, and each child node may in turn be a parent node and be split into another four child nodes. A final, unsplit child node, as a leaf node of the quadtree, comprises a coding node, i.e., a coded video block. Syntax data associated with a coded bitstream may define a maximum number of times a treeblock may be split, and may also define a minimum size of the coding nodes.

A CU includes a coding node and prediction units (PUs) and transform units (TUs) associated with the coding node. A size of the CU generally corresponds to a size of the coding node and must typically be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

In general, a PU includes data related to the prediction process. For example, when the PU is intra-mode encoded, the PU may include data describing an intra-prediction mode for the PU. As another example, when the PU is inter-mode encoded, the PU may include data defining a motion vector for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector, which may be indicated by a prediction direction.

In general, a TU is used for the transform and quantization processes. A given CU having one or more PUs may also include one or more transform units (TUs). Following prediction, video encoder 20 may calculate residual values from the video block identified by the coding node in accordance with the PU. The coding node is then updated to reference the residual values rather than the original video block. The residual values comprise pixel difference values that may be transformed into transform coefficients, quantized, and scanned using the transforms and other transform information specified in the TUs to produce serialized transform coefficients for entropy coding. The coding node may once again be updated to refer to these serialized transform coefficients. This disclosure typically uses the term "video block" to refer to a coding node of a CU. In some specific cases, this disclosure may also use the term "video block" to refer to a treeblock, i.e., LCU, or a CU, which includes a coding node and PUs and TUs.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up", "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data to which the transforms specified by TUs of the CU are applied. The residual data may correspond to pixel differences between pixels of the unencoded picture and prediction values corresponding to the CUs. Video encoder 20 may form the residual data for the CU, and then transform the residual data to produce transform coefficients.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an $n$-bit value may be rounded down to an $m$-bit value during quantization, where n is greater than $m$.

In some examples, video encoder 20 may utilize a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode the one-dimensional vector, e.g., according to context adaptive variable length coding (CAVLC), context adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

To perform CABAC, video encoder 20 may assign a context within a context model to a symbol to be transmitted. The context may relate to, for example, whether neighboring values of the symbol are non-zero or not. To perform CAVLC, video encoder 20 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

HEVC extensions are also currently under development in JCT-3V and JCT-VC. In JCT-3V, two HEVC extensions, the multiview extension (MV-HEVC) and 3D video extension (3D-HEVC) are being developed. In addition, two AVC extensions, the MVC+D and 3D-AVC are being developed.

The latest versions of the ongoing standards are listed as follows:

- T. Suzuki, M. M. Hannuksela, Y. Chen, S. Hattori, G. Sullivan, "MVC Extension for Inclusion of Depth Maps Draft Text 6," JCT3V-C1001, Joint Collaborative Team on 3D Video Coding Extension Development of ITU-T SG 16 WP 3 and ISO/IEC JTC 1/SC 29/WG 11, 4th meeting, available at http://phenix.int-evry.fr/jct2/doc_end_user/documents/3_Geneva/wg11/JCT3V-C1001-v3.zip.

- M. M. Hannuksela, Y. Chen, T. Suzuki, J.-R. Ohm, G. Sullivan, "3D-AVC Draft Text 8," JCT3V-F1002, Joint Collaborative Team on 3D Video Coding Extension Development of ITU-T SG 16 WP 3 and ISO/IEC JTC 1/SC 29/WG 11, 6th Meeting, available at http://phenix.int-evry.fr/jct2/doc_end_user/documents/6_Geneva/wg11/JCT3V-F1002-v3.zip.

- JCT3V-F1004, "MV-HEVC Draft Text 6,"G. Tech, K. Wegner, Y. Chen, M. Hannuksela, Joint Collaborative Team on 3D Video Coding Extension Development of ITU-T SG 16 WP 3 and ISO/IEC JTC 1/SC 29/WG 11, 6th Meeting, available at http://phenix.int-evry.fr/jct2/doc_end_user/documents/6_Geneva/wg11/JCT3V-F1004-v6.zip.

- Gerhard Tech, Krzysztof Wegner, Ying Chen, Sehoon Yea, "3D-HEVC Draft Text 2," JCT3V-F1001, Joint Collaborative Team on 3D Video Coding Extension Development of ITU-T SG 16 WP 3 and ISO/IEC JTC 1/SC 29/WG 11, 6th Meeting, available at http://phenix.int-evry.fr/jct2/doc_end_user/documents/6_Geneva/wg11/JCT3V-F1001-v2.

Multiview video coding techniques of extensions of the H.264/Advanced Video Coding (AVC) standard will now be discussed. However, the techniques of this disclosure may be applicable with any video coding standard that supports multiview coding and/or 3D coding multiview proposals for the emerging HEVC standard (e.g., multiview HEVC and 3D-HEVC).

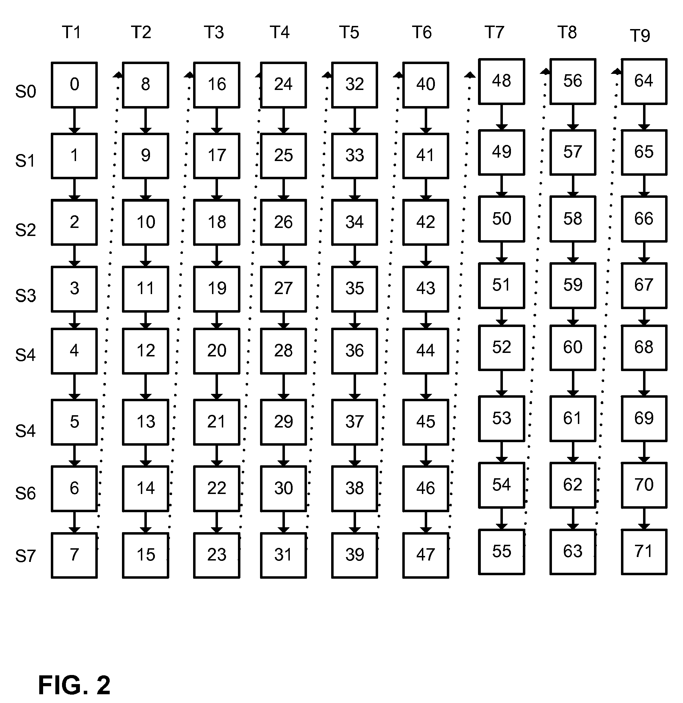

Multiview video coding (MVC) is an extension of H.264/AVC. A typical MVC decoding order (i.e. bitstream order) is shown in FIG. 2. The decoding order arrangement is referred as time-first coding. Note that the decoding order of access units may not be identical to the output or display order. In FIG. 2, S0-S7 each refers to different views of the multiview video. T0-T8 each represents one output time instance. An access unit may include the coded pictures of all the views for one output time instance. For example, a first access unit may include all of the views S0-S7 for time instance T0, a second access unit may include all of the views S0-S7 for time instance T1, and so forth.

For purposes of brevity, the disclosure may use the following definitions:

> **view component:** A *coded representation* of a *view* in a single *access unit*. When a view includes both coded texture and depth representations, a view component may include a texture view component and a depth view component.
> **texture view component:** A *coded representation* of the texture of a view in a single *access unit*.
> **depth view component:** A *coded representation* of the depth of a view in a single *access unit*.

As discussed above, in the context of this disclosure, the view component, texture view component, and depth vide component may be generally referred to as a layer. In FIG. 2, each of the views includes sets of pictures. For example, view S0 includes set of pictures 0, 8, 16, 24, 32, 40, 48, 56, and 64, view S1 includes set of pictures 1, 9, 17, 25, 33, 41, 49, 57, and 65, and so forth. Each set includes two pictures: one picture is referred to as a texture view component, and the other picture is referred to as a depth view component. The texture view component and the depth view component within a set of pictures of a view may be considered as corresponding to one another. For example, the texture view component within a set of pictures of a view is considered as corresponding to the depth view component within the set of the pictures of the view, and vice-versa (i.e., the depth view component corresponds to its texture view component in the set, and vice-versa). As used in this disclosure, a texture view component that corresponds to a depth view component may be considered as the texture view component and the depth view component being part of a same view of a single access unit.

The texture view component includes the actual image content that is displayed. For example, the texture view component may include luma (Y) and chroma (Cb and Cr) components. The depth view component may indicate relative depths of the pixels in its corresponding texture view component. As one example, the depth view component is a gray scale image that includes only luma values. In other words, the depth view component may not convey any image content, but rather provide a measure of the relative depths of the pixels in the texture view component.

For example, a purely white pixel in the depth view component indicates that its corresponding pixel or pixels in the corresponding texture view component is closer from the perspective of the viewer, and a purely black pixel in the depth view component indicates that its corresponding pixel or pixels in the corresponding texture view component is further away from the perspective of the viewer. The various shades of gray in between black and white indicate different depth levels. For instance, a very gray pixel in the depth view component indicates that its corresponding pixel in the texture view component is further away than a slightly gray pixel in the depth view component. Because only gray scale is needed to identify the depth of pixels, the depth view component need not include chroma components, as color values for the depth view component may not serve any purpose.

The depth view component using only luma values (e.g., intensity values) to identify depth is provided for illustration purposes and should not be considered limiting. In other examples, any technique may be utilized to indicate relative depths of the pixels in the texture view component.

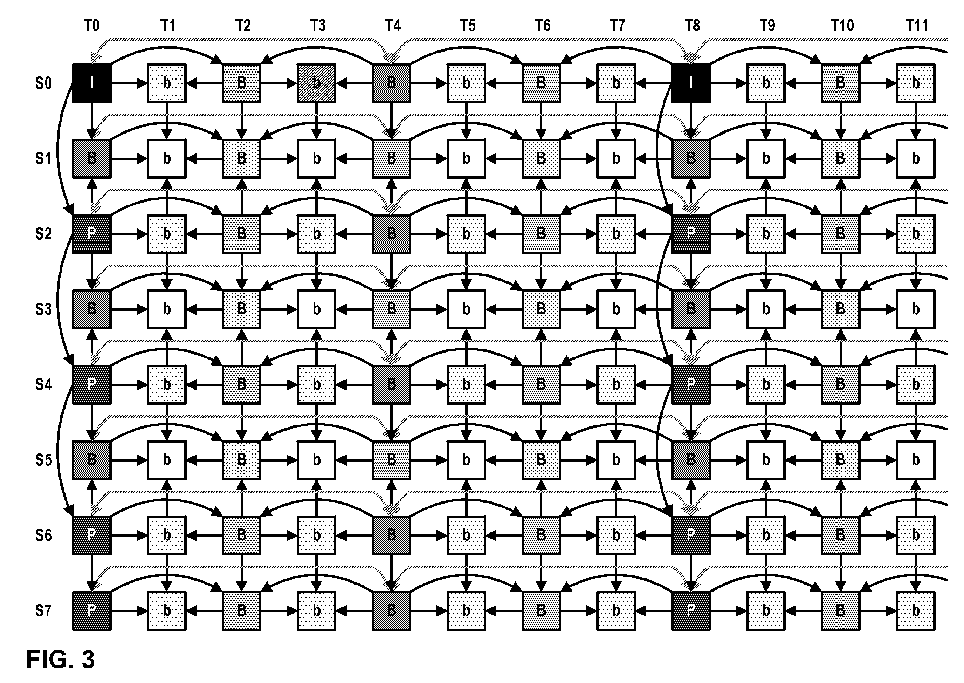

A typical MVC prediction structure (including both inter-picture prediction within each view and inter-view prediction) for multi-view video coding is shown in FIG. 3. Prediction directions are indicated by arrows, the pointed-to object using the pointed-from object as the prediction reference. In MVC, inter-view prediction is supported by disparity motion compensation, which uses the syntax of the H.264/AVC motion compensation, but allows a picture in a different view to be used as a reference picture.

In the example of FIG. 3, six views (having view IDs "S0" through "S5") are illustrated, and twelve temporal locations ("T0" through "T11") are illustrated for each view. That is, each row in FIG. 3 corresponds to a view, while each column indicates a temporal location.

Although MVC has a so-called base view, which is decodable by H.264/AVC decoders, and stereo view pairs could be supported also by MVC, the advantage of MVC is that it could support an example that uses more than two views as a 3D video input and decodes this 3D video represented by the multiple views. A renderer of a client having an MVC decoder may expect 3D video content with multiple views.

Pictures in FIG. 3 are indicated at the intersection of each row and each column. The H.264/AVC standard may use the term frame to represent a portion of the video. This disclosure may use the term picture and frame interchangeably.

The pictures in FIG. 3 are illustrated using a block including a letter, the letter designating whether the corresponding picture is intra-coded (that is, an I-picture), or inter-coded in one direction (that is, as a P-picture) or in multiple directions (that is, as a B-picture). In general, predictions are indicated by arrows, where the pointed-to pictures use the pointed-from picture for prediction reference. For example, the P-picture of view S2 at temporal location T0 is predicted from the I-picture of view S0 at temporal location T0.

As with single view video encoding, pictures of a multiview video coding video sequence may be predictively encoded with respect to pictures at different temporal locations. For example, the b-picture of view S0 at temporal location T1 has an arrow pointed to it from the I-picture of view S0 at temporal location T0, indicating that the b-picture is predicted from the I-picture. Additionally, however, in the context of multiview video encoding, pictures may be inter-view predicted. That is, a view component can use the view components in other views for reference. In MVC, for example, inter-view prediction is realized as if the view component in another view is an inter-prediction reference. The potential inter-view references are signaled in the Sequence Parameter Set (SPS) MVC extension and can be modified by the reference picture list construction process, which enables flexible ordering of the inter-prediction or inter-view prediction references. Inter-view prediction is also a feature of proposed multiview extension of HEVC, including 3D-HEVC (multiview plus depth).

FIG. 3 provides various examples of inter-view prediction. Pictures of view S1, in the example of FIG. 3, are illustrated as being predicted from pictures at different temporal locations of view S1, as well as inter-view predicted from pictures of views S0 and S2 at the same temporal locations. For example, the b-picture of view S1 at temporal location T1 is predicted from each of the B-pictures of view S1 at temporal locations T0 and T2, as well as the b-pictures of views S0 and S2 at temporal location T1.

In some examples, FIG. 3 may be viewed as illustrating the texture view components. For example, the I-, P-, B-, and b-pictures illustrated in FIG. 2 may be considered as texture view components for each of the views. In accordance with the techniques described in this disclosure, for each of the texture view components illustrated in FIG. 3 there is a corresponding depth view component. In some examples, the depth view components may be predicted in a manner similar to that illustrated in FIG. 3 for the corresponding texture view components.

Coding of two views may also be supported by MVC. One of the advantages of MVC is that an MVC encoder may take more than two views as a 3D video input and an MVC decoder may decode such a multiview representation. As such, any renderer with an MVC decoder may decode 3D video content with more than two views.

As discussed above, in MVC, inter-view prediction is allowed among pictures in the same access unit (meaning, in some instances, with the same time instance). When coding a picture in one of the non-base views, a picture may be added into a reference picture list, if it is in a different view but within a same time instance. An inter-view prediction reference picture may be put in any position of a reference picture list, just like any inter-prediction reference picture. As shown in FIG. 3, a view component can use the view components in other views for reference. In MVC, inter-view prediction is realized as if the view component in another view was an inter-prediction reference.

In MVC, inter-view prediction is allowed among pictures in the same access unit (i.e., with the same time instance). When coding a picture in one of the non-base views, a picture may be added into a reference picture list, if it is in a different view but with a same time instance. An inter-view prediction reference picture can be put in any position of a reference picture list, just like any inter prediction reference picture.

As shown in FIG. 3, a view component can use the view components in other views for reference. This is called inter-view prediction. In MVC, inter-view prediction is realized as if the view component in another view was an inter prediction reference. The potential inter-view references, however, are signaled in the Sequence Parameter Set (SPS) MVC extension (as shown in Table 1) and can be modified by the reference picture list construction process, which enables flexible ordering of the inter prediction or inter-view prediction references.

Table 1 - SPS MVC Extension Syntax Table

| seq_parameter_set_mvc_extension(){ | | Descriptor |
|---|---|---|
| **num_views_minus1** | | ue(v) |
| for(i=0;i<=num_views_minus1;i++) | | |
| **view_id[i]** | | ue(v) |
| for(i=1;i<=num_views_minus1;i++){ | | |
| **num_anchor_refs_10[i]** | | ue(v) |
| for(j=0;j<num_anchor_refs_10[i];j++) | | |
| **anchor_ref_10[i][j]** | | ue(v) |
| **num_anchor_refs_l1[i]** | | ue(v) |
| for(j=0;j<num_anchor_refs_l1[i];j++) | | |
| **anchor_ref_l1[i][j]** | | ue(v) |
| } | | |
| for(i=1;i<=num_views_minus1;i++){ | | |
| **num_non_anchor_refs_10[i]** | | ue(v) |
| for(j=0;j<num_non_anchor_refs_10[i];j++) | | |
| **non_anchor_ref_l0[i][j]** | | ue(v) |
| **num_non_anchor_refs_l1[i]** | | ue(v) |
| for(j=0;j<num_non_anchor_refs_l1[i];j++) | | |
| **non_anchor_ref_l1[i][j]** | | ue(v) |
| } | | |
| **num_level_values_signalled_minus1** | | ue(v) |
| for(i=0;i<=num_level_values_signalled_minus1;i++){ | | |
| **level_idc[i]** | | u(8) |
| **num_applicable_ops_minus1[i]** | | ue(v) |
| for(j=0;j<= num_applicable_ops_minus1[i];j++){ | | |
| **applicable_op_temporal_id[i][j]** | | u(3) |
| **applicable_op_num_target_views_minus1[i][j]** | | ue(v) |
| for(k=0;k<= applicable_op_num_target_views_minus1[i][j];k++) | | |
| **applicable_op_target_view_id[i][j][k]** | | ue(v) |
| **applicable_op_num_views_minus1[i][j]** | | ue(v) |
| } | | |
| } | | |
| } | | |

In the SPS MVC extension, for each view, the number of views that can be used to form reference picture list 0 and reference picture list 1 are signaled. Prediction relationships for an anchor picture, as signaled in the SPS MVC extension, can be different from the prediction relationship for a non-anchor picture (signaled in the SPS MVC extension) of the same view.

The next section will discuss multi-view and 3D video coding with respect to HEVC. In particular, example techniques of this disclosure are applicable when coding two or more views, each with a texture view component and a depth view component. The plurality of video pictures for each view may be referred to as texture view components. Each texture view component has a corresponding depth view component. The texture view components include video content (e.g., luma and chroma components of pixel values), and the depth view components may indicate relative depths of the pixels within the texture view components.

The techniques of this disclosure relate to coding 3D video data by coding texture and depth data. In general, the term "texture" is used to describe luminance (that is, brightness or "luma") values of an image and chrominance (that is, color or "chroma") values of the image. In some examples, a texture image may include one set of luminance data and two sets of chrominance data, for blue hues (Cb) and red hues (Cr). In certain chroma formats, such as 4:2:2 or 4:2:0, the chroma data is downsampled relative to the luma data. That is, the spatial resolution of chrominance components is lower than the spatial resolution of corresponding luminance components, e.g., one-half or one-quarter of the luminance resolution.

Depth data generally describes depth values for corresponding texture data. For example, a depth image may include a set of depth pixels that each describes depth for corresponding texture data. The depth data may be used to determine horizontal disparity for the corresponding texture data. Thus, a device that receives the texture and depth data may display a first texture image for one view (e.g., a left eye view) and use the depth data to modify the first texture image to generate a second texture image for the other view (e.g., a right eye view) by offsetting pixel values of the first image by the horizontal disparity values determined based on the depth values. In general, horizontal disparity (or simply "disparity") describes the horizontal spatial offset of a pixel in a first view to a corresponding pixel in a second view, where the two pixels correspond to the same portion of the same object as represented in the two views.

In still other examples, depth data may be defined for pixels in a z-dimension perpendicular to the image plane, such that a depth associated with a given pixel is defined relative to a zero disparity plane defined for the image. Such depth may be used to create horizontal disparity for displaying the pixel, such that the pixel is displayed differently for the left and right eyes, depending on the z-dimension depth value of the pixel relative to the zero disparity plane. The zero disparity plane may change for different portions of a video sequence, and the amount of depth relative to the zero-disparity plane may also change. Pixels located on the zero disparity plane may be defined similarly for the left and right eyes. Pixels located in front of the zero disparity plane may be displayed in different locations for the left and right eye (e.g., with horizontal disparity) so as to create a perception that the pixel appears to come out of the image in the z-direction perpendicular to the image plane. Pixels located behind the zero disparity plane may be displayed with a slight blur, to present a slight perception of depth, or may be displayed in different locations for the left and right eye (e.g., with horizontal disparity that is opposite that of pixels located in front of the zero disparity plane). Many other techniques may also be used to convey or define depth data for an image.

For each pixel in the depth view component, there may be one or more corresponding pixels in the texture view component. For instance, if the spatial resolutions of the depth view component and the texture view component are the same, each pixel in the depth view component corresponds to one pixel in the texture view component. If the spatial resolution of the depth view component is less than that of the texture view component, then each pixel in the depth view component corresponds to multiple pixels in the texture view component. The value of the pixel in the depth view component may indicate the relative depth of the corresponding one or more pixels in the texture view.

In some examples, a video encoder signals video data for the texture view components and the corresponding depth view components for each of the views. A video decoder utilizes both the video data of texture view components and the depth view components to decode the video content of the views for display. A display then displays the multiview video to produce 3D video.

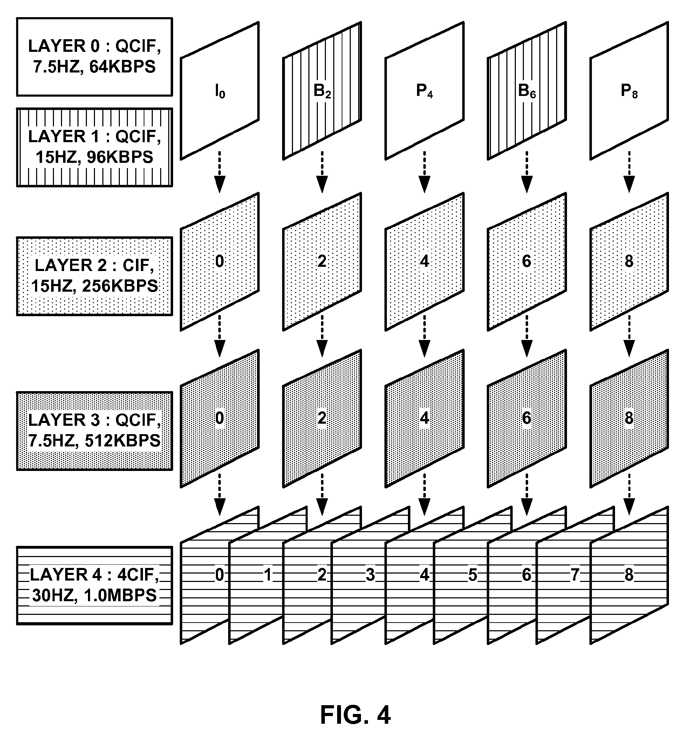

Scalable extensions of HEVC are also being developed by JCT-VC. FIG. 4 is a conceptual diagram illustrating one example of scalable video coding. While FIG. 4 is described with respect to H.264/AVC and SVC, it should be understood that similar layers may be coded suing other multilayer video coding schemes, including scalable extension of HEVC. The example of FIG. 4 shows layers coded using the same codec. In other examples, layers may be coded using a multi-standard codec. For example, a base layer may be coded using H.264/AVC, while an enhancement layer may be coded using a scalable extension to HEVC. Thus, references to SVC below may apply to scalable video coding in general, and are not restricted to H.264/SVC.

In SVC, scalabilities may be enabled in three dimensions including, for example, spatial, temporal, and quality (represented as a bit rate or signal to noise ratio (SNR)). In general, better representation can be normally achieved by adding to a representation in any dimension. For example, in the example of FIG. 4, layer 0 is coded at Quarter Common Intermediate Format (QCIF) having a frame rate of 7.5 Hz and a bit rate of 64 kilobytes per second (KBPS). In addition, layer 1 is coded at QCIF having a frame rate of 15 Hz and a bit rate of 64 KBPS, layer 2 is coded at CIF having a frame rate of 15 Hz and a bit rate of 256 KBPS, layer 3 is coded at QCIF having a frame rate of 7.5 Hz and a bit rate of 512 KBPS, and layer 4 is coded at 4CIF having a frame rate of 30 Hz and a bit rate of Megabyte per second (MBPS). It should be understood that the particular number, contents and arrangement of the layers shown in FIG. 4 are provided for purposes of example only.

In any case, once a video encoder (such as video encoder 20) has encoded content in such a scalable way, a video decoder (such as video decoder 30) may use an extractor tool to adapt the actual delivered content according to application requirements, which may be dependent e.g., on the client or the transmission channel.

In SVC, pictures having the lowest spatial and quality layer are typically compatible with H.264/AVC. In the example of FIG. 4, pictures with the lowest spatial and quality layer (pictures in layer 0 and layer 1, with QCIF resolution) may be compatible with H.264/AVC. Among them, those pictures of the lowest temporal level form the temporal base layer (layer 0). This temporal base layer (layer 0) may be enhanced with pictures of higher temporal levels (layer 1).

In addition to the H.264/AVC compatible layer, several spatial and/or quality enhancement layers may be added to provide spatial and/or quality scalabilities. Each spatial or quality enhancement layer itself may be temporally scalable, with the same temporal scalability structure as the H.264/AVC compatible layer.

Once each of the layers is decoded, e.g., by video decoder 30 or the reconstruction loop of video encoder 20, the decoded layer is stored in a DPB. A DPB is a buffer or memory that is used to store pictures, and in the example of this disclosure, layers or decoded pictures when using multi-layer video coding techniques. The decoded layers stored in the DPB may be used as references for inter-prediction (including motion compensation, inter-view and inter-layer prediction), for output reordering, and output delay. In HEVC, and other video coding standards, the operation of the DPB is often specified in relation to a hypothetical reference decoder (HRD). Video encoder 20 and video decoder 30 may be configured to manage the DPB to perform various actions, including marking decoded pictures stored in the DPB as unused for reference (i.e., unable to be used a reference picture for an inter prediction process), marking a decoded picture for output (e.g., to display device 32), and marking a picture for removal from the DPB (also called bumping). A picture is typically removed (i.e., bumped) from the DPB when it is no longer needed as a reference picture for inter-prediction and n longer needed for output.

Whether coding using scalable, multiview, or 3D video coding techniques, different layers, texture views, and/or depth views may have different spatial resolutions. That is, components (e.g., view components or layer components, corresponding to a picture or depth map) of different layers or views may have different spatial resolutions. In existing DPB management techniques, the output related operations are performed for each view or layer separately. This means that for each view, marking for output or removal of a reference picture (of one layer/view) is done separately, although constraints or alignments may apply.

Without loss of generality, in this disclosure, a decoded layer representation or decoded texture/depth view component of one access unit is also referred to as a decoded layer component of the access unit. In multi-layer video coding involving multiple spatial resolutions in different layers, particularly when multi-loop decoding is applied, and wherein at least two more layers may be fully reconstructed during the decoding process, storage of decoded layer components of different layers into the decoded picture buffer or buffers would be needed.

In SVC, single-loop decoding is applied, thus only the highest layer may be fully reconstructed and only the decoded layer component of the highest layer in each access unit may need to be stored. In existing techniques for MVC, though multiple loop decoding is applied, different views are required to have the same spatial resolution. Thus, though multiple decoded layer components in each access unit need to be stored, they all have the same resolution. Currently, there is no mechanism for DPB management when multiple decoded layer components with different resolutions need to be stored.

In view of these drawbacks, this disclosure describes various mechanisms and techniques for DPB management when multiple decoded layer components with different resolutions need to be stored.

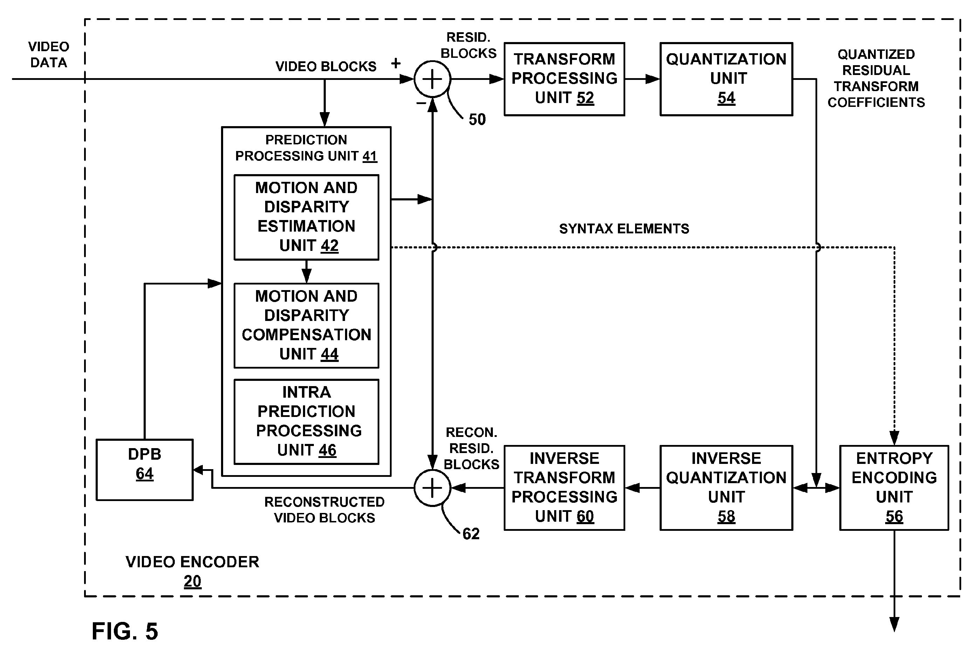

FIG. 5 is a block diagram illustrating an example video encoder 20 that may implement the techniques for DPB management described in this disclosure. Video encoder 20 may be configured to encode video data according to any video encoding techniques, including HEVC and H.264/AVC, as well as scalable, multiview and 3D extensions of such standards. The example of FIG. 5 will be explained with reference to HEVC. In this regard, the video encoding loop shown in FIG. 5 may be applied to each layer of a scalable video encoding process (i.e., base layers and enhancement layers), to each view of a multiview video coding process, or to both texture and depth views of a 3D video coding process.

Video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based compression modes. Inter-modes, such as uni-directional prediction (P mode) or bi-prediction (B mode), may refer to any of several temporal-based compression modes. In addition, video encoder 20 may perform inter-view prediction and/or inter-layer prediction between different views or layers, as described above.

In the example of FIG. 5, video encoder 20 includes a prediction processing unit 41, DPB 64, summer 50, transform processing unit 52, quantization unit 54, and entropy encoding unit 56. Prediction processing unit 41 includes motion and disparity estimation unit 42, motion and disparity compensation unit 44, and intra prediction processing unit 46. For video block reconstruction, video encoder 20 also includes inverse quantization unit 58, inverse transform processing unit 60, and summer 62. A deblocking filter (not shown in FIG. 5) may also be included to filter block boundaries to remove blockiness artifacts from reconstructed video. If desired, the deblocking filter would typically filter the output of summer 62. Additional loop filters (in loop or post loop) may also be used in addition to the deblocking filter.

As shown in FIG. 5, video encoder 20 receives video data and may be configured to partition the data into video blocks. This partitioning may also include partitioning into slices, tiles, or other larger units, as wells as video block partitioning, e.g., according to a quadtree structure of LCUs and CUs. Video encoder 20 generally illustrates the components that encode video blocks within a video slice to be encoded. The slice may be divided into multiple video blocks (and possibly into sets of video blocks referred to as tiles). Prediction processing unit 41 may select one of a plurality of possible coding modes, such as one of a plurality of intra coding modes or one of a plurality of inter coding modes or interview coding modes, for the current video block based on error results (e.g., coding rate and the level of distortion). Prediction processing unit 41 may provide the resulting intra- or inter-coded block to summer 50 to generate residual block data and to summer 62 to reconstruct the encoded block for use as a reference picture.

Intra prediction processing unit 46 within prediction processing unit 41 may perform intra-predictive coding of the current video block relative to one or more neighboring blocks in the same frame or slice as the current block to be coded to provide spatial compression. Motion and disparity estimation unit 42 and motion and disparity compensation unit 44 within prediction processing unit 41 perform inter-predictive coding and/or interview coding of the current video block relative to one or more predictive blocks in one or more reference pictures, reference picture layers, and/or reference views to provide temporal and interview prediction.

Motion and disparity estimation unit 42 may be configured to determine the inter-prediction mode and/or interview prediction mode for a video slice according to a predetermined pattern for a video sequence. The predetermined pattern may designate video slices in the sequence as P slices or B slices. Motion and disparity estimation unit 42 and motion and disparity compensation unit 44 may be highly integrated, but are illustrated separately for conceptual purposes. Motion estimation, performed by motion and disparity estimation unit 42, is the process of generating motion vectors, which estimate motion for video blocks. A motion vector, for example, may indicate the displacement of a PU of a video block within a current video frame or picture relative to a predictive block within a reference picture. Disparity estimation, performed by motion and disparity estimation unit 42, is the process of generating disparity vectors, which may be used to predict a currently coded block from a block in a different view.

A predictive block is a block that is found to closely match the PU of the video block to be coded in terms of pixel difference, which may be determined by sum of absolute difference (SAD), sum of square difference (SSD), or other difference metrics. In some examples, video encoder 20 may calculate values for sub-integer pixel positions of reference pictures stored in DPB 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion and disparity estimation unit 42 calculates a motion vector (for motion compensated prediction) and/or a disparity vector (for disparity compensated prediction) for a PU of a video block in an inter-coded or interview predicted slice by comparing the position of the PU to the position of a predictive block of a reference picture. The reference picture may be selected from a first reference picture list (List 0) or a second reference picture list (List 1), each of which identify one or more reference pictures stored in DPB 64. For interview prediction, the reference picture is in a different view. Motion and disparity estimation unit 42 sends the calculated motion vector and/or disparity vector to entropy encoding unit 56 and motion compensation unit 44.

Motion compensation and/or disparity compensation, performed by motion and disparity compensation unit 44, may involve fetching or generating the predictive block based on the motion vector determined by motion estimation and/or disparity estimation, possibly performing interpolations to sub-pixel precision. Upon receiving the motion vector and/or disparity for the PU of the current video block, motion and disparity compensation unit 44 may locate the predictive block to which the motion vector and/or disparity vector points in one of the reference picture lists. Video encoder 20 forms a residual video block by subtracting pixel values of the predictive block from the pixel values of the current video block being coded, forming pixel difference values. The pixel difference values form residual data for the block, and may include both luma and chroma difference components. Summer 50 represents the component or components that perform this subtraction operation. Motion and disparity compensation unit 44 may also generate syntax elements associated with the video blocks and the video slice for use by video decoder 30 in decoding the video blocks of the video slice.

Intra-prediction processing unit 46 may intra-predict a current block, as an alternative to the inter-prediction performed by motion and disparity estimation unit 42 and motion and disparity compensation unit 44, as described above. In particular, intra-prediction processing unit 46 may determine an intra-prediction mode to use to encode a current block. In some examples, intra-prediction processing unit 46 may encode a current block using various intra-prediction modes, e.g., during separate encoding passes, and intra-prediction processing unit 46 (or mode select unit 40, in some examples) may select an appropriate intra-prediction mode to use from the tested modes. For example, intra-prediction processing unit 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bit rate (that is, a number of bits) used to produce the encoded block. Intra-prediction processing unit 46 may calculate ratios from the distortions and rates for the various encoded blocks to determine which intra-prediction mode exhibits the best rate-distortion value for the block.

In any case, after selecting an intra-prediction mode for a block, intra-prediction processing unit 46 may provide information indicative of the selected intra-prediction mode for the block to entropy coding unit 56. Entropy coding unit 56 may encode the information indicating the selected intra-prediction mode in accordance with the techniques of this disclosure. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

After prediction processing unit 41 generates the predictive block for the current video block via either inter-prediction or intra-prediction, video encoder 20 forms a residual video block by subtracting the predictive block from the current video block. The residual video data in the residual block may be included in one or more TUs and applied to transform processing unit 52. Transform processing unit 52 transforms the residual video data into residual transform coefficients using a transform, such as a discrete cosine transform (DCT) or a conceptually similar transform. Transform processing unit 52 may convert the residual video data from a pixel domain to a transform domain, such as a frequency domain.

Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy encodes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy encoding methodology or technique. Following the entropy encoding by entropy encoding unit 56, the encoded bitstream may be transmitted to video decoder 30, or archived for later transmission or retrieval by video decoder 30. Entropy encoding unit 56 may also entropy encode the motion vectors and the other syntax elements for the current video slice being coded.

Inverse quantization unit 58 and inverse transform processing unit 60 apply inverse quantization and inverse transformation, respectively, to reconstruct the residual block in the pixel domain for later use as a reference block of a reference picture. This part of video encoder 20 is sometimes called the reconstruction loop, and effectively decodes an encoded video block for use as a reference picture in inter-prediction. The reconstructed pictures are stored in DPB 64.

Motion and disparity compensation unit 44 may calculate a reference block by adding the residual block to a predictive block of one of the reference pictures within one of the reference picture lists. Motion and disparity compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reference block for storage in DPB 64. The reference block may be used by motion and disparity estimation unit 42 and motion and disparity compensation unit 44 as a reference block to inter-predict a block in a subsequent video frame or picture. As will be discussed in more detail below, video encoder 20 may be configured to perform the DPB management techniques of this disclosure that allow for the storing and management of multiple layers of video data in the DPB at different resolutions.

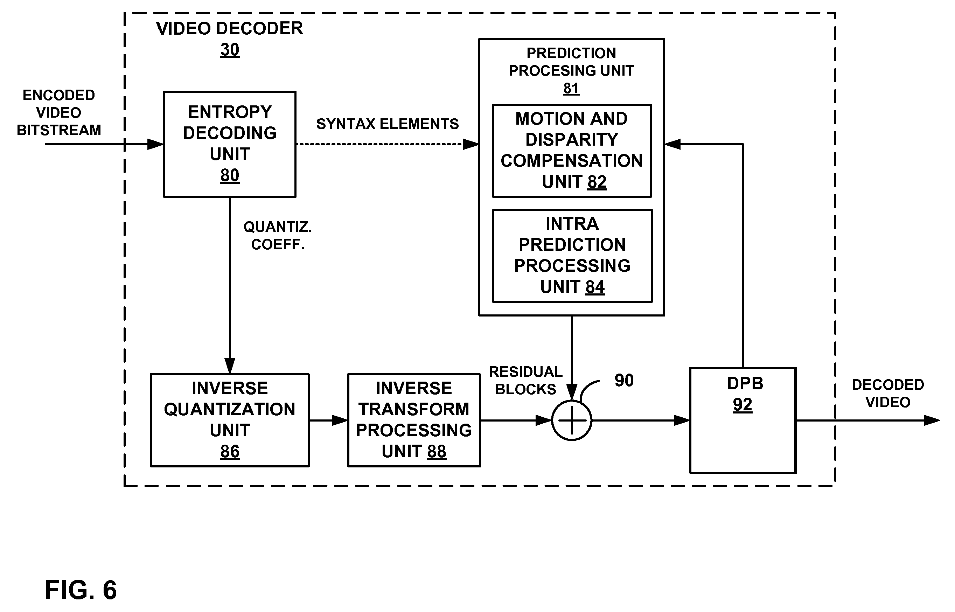

FIG. 6 is a block diagram illustrating an example video decoder 30 that may implement the DPB management techniques described in this disclosure. In the example of FIG. 6, video decoder 30 includes an entropy decoding unit 80, prediction processing unit 81, inverse quantization unit 86, inverse transformation unit 88, summer 90, and DPB 92. Prediction processing unit 81 includes motion and disparity compensation unit 82 and intra prediction processing unit 84. Video decoder 30 may, in some examples, perform a decoding pass generally reciprocal to the encoding pass described with respect to video encoder 20 from FIG. 5.

During the decoding process, video decoder 30 receives an encoded video bitstream that represents video blocks of an encoded video slice and associated syntax elements from video encoder 20. Entropy decoding unit 80 of video decoder 30 entropy decodes the bitstream to generate quantized coefficients, motion vectors, disparity vectors, and other syntax elements. Entropy decoding unit 80 forwards the motion vectors, disparity vectors, and other syntax elements to prediction processing unit 81. Video decoder 30 may receive the syntax elements at the video slice level and/or the video block level.

When the video slice is coded as an intra-coded (I) slice, intra prediction processing unit 84 of prediction processing unit 81 may generate prediction data for a video block of the current video slice based on a signaled intra prediction mode and data from previously decoded blocks of the current frame or picture. When the video frame is coded as an inter-coded (i.e., B, or P) slice or interview predicted slice, motion and disparity compensation unit 82 of prediction processing unit 81 produces predictive blocks for a video block of the current video slice based on the motion vectors, disparity vectors and other syntax elements received from entropy decoding unit 80. The predictive blocks may be produced from one of the reference pictures within one of the reference picture lists. Video decoder 30 may construct the reference frame lists, List 0 and List 1, using default construction techniques based on reference pictures stored in DPB 92.

Motion and disparity compensation unit 82 determines prediction information for a video block of the current video slice by parsing the motion vectors and other syntax elements, and uses the prediction information to produce the predictive blocks for the current video block being decoded. For example, motion and disparity compensation unit 82 uses some of the received syntax elements to determine a prediction mode (e.g., intra- or inter-prediction) used to code the video blocks of the video slice, an inter-prediction or interview prediction slice type (e.g., B slice or P slice), construction information for one or more of the reference picture lists for the slice, motion vectors and/or disparity vectors for each inter-encoded video block of the slice, inter-prediction status for each inter-coded video block of the slice, and other information to decode the video blocks in the current video slice.

Motion and disparity compensation unit 82 may also perform interpolation based on interpolation filters. Motion compensation unit 82 may use interpolation filters as used by video encoder 20 during encoding of the video blocks to calculate interpolated values for sub-integer pixels of reference blocks. In this case, motion compensation unit 82 may determine the interpolation filters used by video encoder 20 from the received syntax elements and use the interpolation filters to produce predictive blocks.

Inverse quantization unit 86 inverse quantizes, i.e., de-quantizes, the quantized transform coefficients provided in the bitstream and decoded by entropy decoding unit 80. The inverse quantization process may include use of a quantization parameter calculated by video encoder 20 for each video block in the video slice to determine a degree of quantization and, likewise, a degree of inverse quantization that should be applied. Inverse transform processing unit 88 applies an inverse transform, e.g., an inverse DCT, an inverse integer transform, or a conceptually similar inverse transform process, to the transform coefficients in order to produce residual blocks in the pixel domain.

After motion and disparity compensation unit 82 generates the predictive block for the current video block based on the motion vectors and/or disparity vectors and other syntax elements, video decoder 30 forms a decoded video block by summing the residual blocks from inverse transform processing unit 88 with the corresponding predictive blocks generated by motion compensation unit 82. Summer 90 represents the component or components that perform this summation operation. If desired, a deblocking filter may also be applied to filter the decoded blocks in order to remove blockiness artifacts. Other loop filters (either in the coding loop or after the coding loop) may also be used to smooth pixel transitions, or otherwise improve the video quality.

The decoded video blocks in a given frame or picture are then stored in DPB 92, which stores reference pictures used for subsequent motion compensation. As will be described in more detail below, video decoder 30 may be configured to perform the techniques of this disclosure for DPB management when storing multiple layers of video data in the DPB at different resolutions. DPB 92 also stores decoded video for presentation on a display device, such as display device 32 of FIG. 1.

A video coder (e.g., video encoder 20 or video decoder 30) may be configured to perform any combination of the following techniques for DPB management. In general, each of the following techniques exhibits the following features. Video encoder 20 and/or video decoder 30 may be configured to decode (e.g., in the reconstruction loop for video encoder 20) video data to produce a plurality of decoded layer components. Video encoder 20 and/or video decoder 30 may be configured to store the decoded layer components in one or more sub-units of a DPB. In this context, a "unit" of the DPB is a separately addressable area of the DPB containing reconstructed or decoded video data having some common characteristic. Further more, a sub-unit of a DPB may be considered a separately addressable area of the DPB that is itself managed and treated like a separate DPB.

Video encoder 20 and/or video decoder 30 may be further configured to perform a DPB management process on the one or more sub-units, wherein the DPB management process is managed separately for each of the one or more sub-units. The DPB management processes may include one or more of removing a decoded layer component from the sub-unit, and marking a decoded layer component in the sub-unit as unused for reference. In this way, in some examples, decoded and/or reconstructed layers having different characteristics (e.g., spatial resolution, layer type) may be managed separately.

In further examples of the examples of the disclosure, video encoder 20 and/or video decoder 30 may be configured to perform the DPB management process on the one or more sub-units by performing the DPB management process on a first decoded layer component in an access unit, and performing the same DPB management process on other decoded layer components in the same access unit.

In one example of the disclosure, a video coder may be configured to decode or reconstruct video data to produce a plurality of decoded layer components, and store the decoded layer components in a single sub-unit of a DPB, such that the single sub-unit of the DPB contains a union of decoded layer components for a fully-reconstructed layer within an access unit. That is, in this example, the DPB consists of only a single sub-unit.

In this example of the disclosure, the single sub-unit of the DPB stores the union of decoded layer components for a fully reconstructed layer within an access unit. In some examples, the union of decoded layer components for a fully reconstructed layer may be the union of both texture view components and depth view components, multiple texture view components, or a base layer and one or more enhancement layers. An access unit is a set of network abstraction layer (NAL) units that are consecutive in decoding order and contain one coded picture. The size of the single sub-units of the DPB may be determined by the sum of a number of samples of all components in all decoded layer components. That is, the size of the single sub-unit of the DPB may be determined based on the resolutions of all the decoded layer components stored in the sub-unit. In this way, video encoder 20 and/or video decoder 30 may be configured to flexibly size the DPB in accordance with the resolution of layers being actually coded.

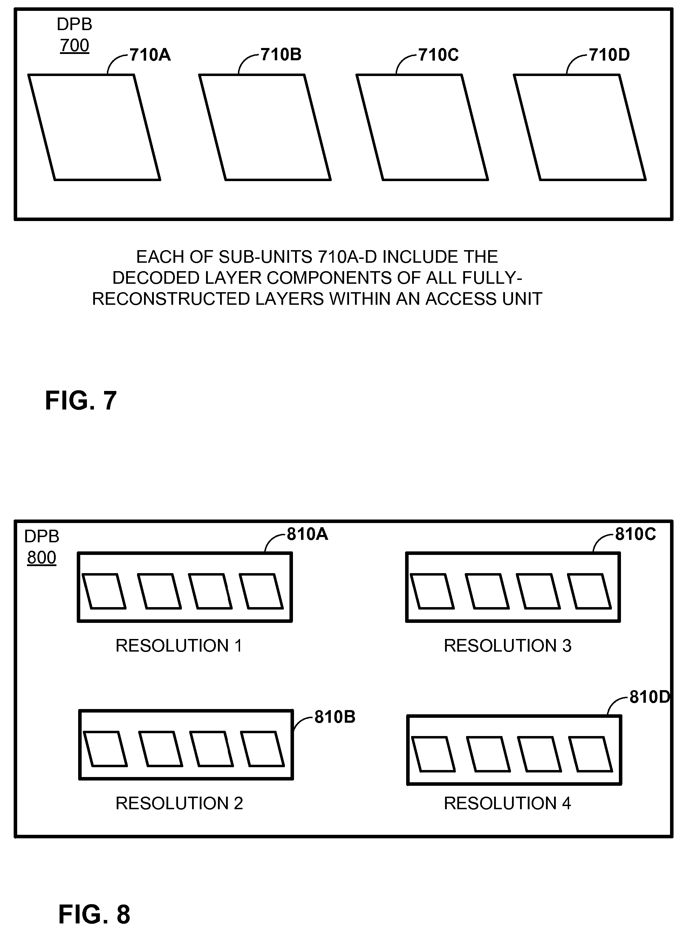

FIG. 7 is a conceptual diagram showing a DPB 700 configured to store the union of decoded layer components of all fully-reconstructed layers within an access unit. Each of sub-units 710A-D represents a storage location for the union of the decoded layer components. The video coder may be further configured to remove a decoded layer component from DPB 700. In this example of the disclosure, removing a particular decoded layer component from the DPB (e.g., removing a texture view component) also removes an entire decoded access unit related to the decoded layer component from the DPB (e.g., also removes other texture view components and/or depth view components). The video coder may be further configured to mark a decoded layer component in the DPB as unused for reference. Likewise, in this example, marking a particular decoded layer component (e.g., a texture view component) as unused for reference also marks an entire decoded access unit related to the decoded layer component (e.g., also marking other texture view components and/or depth view components) as unused for reference.

In another example of the disclosure, a video coder (e.g., video encoder 20 and/or video decoder 30) may be configured to decode video data to produce a plurality of decoded layer components. In some instances, the decoded layer components have at least two different spatial resolutions. The video coder may be further configured to store the decoded layer components in one of a plurality of sub-units of a decoded picture buffer (DPB) depending the spatial resolution of the decoded layer components. For example, each of the plurality of sub-units is associated with a different spatial resolution. In this way, a video coder may be configured to store decoded layer components (e.g., a texture view component, a depth view component, a base layer, an enhancement layer, etc.) in certain sub-units based on their resolution. In this way, each resolution may be handled separately.

FIG. 8 is a conceptual diagram showing a DPB 800 configured to store the decoded layer components at different resolutions in different sub-units. Each of sub-units 810A-D represents storage locations for decoded layer components at different resolutions. For example, each of sub-units 810A-D is designated for storage of different resolution 1-4. Each of sub-units 810A-D contains separate units that are configured to store a decoded layer component associated with a picture. As one example illustration, a texture view component of a picture may be stored in a sub-units corresponding to the resolution of the texture view component (e.g., sub-unit 810A), while a depth view component of the same picture may be stored in a different sub-units corresponding to the resolution (typically lower) of the depth view component (e.g., sub-unit 810B).

The video coder may be further configured to remove decoded layer components from the plurality of sub-units 810A-D. In this example of the disclosure, removal of decoded layer components is managed separately for each sub-unit. For example, removal of a texture view component from sub-unit 810A, will not remove the associated depth view component having a different resolution (e.g., an associated depth-view component stored in sub-unit 810B). Likewise, the video coder may be further configured to mark decoded layer components as unused for reference in the plurality of sub-units, wherein marking is managed separately for each sub-unit.

In a further example, the video coder may also be configured to remove a decoded layer component from one of the plurality of sub-units 810A-D, wherein removing the decoded layer component also removes an entire decoded access unit related to the decoded layer component from the one of the plurality of sub-units 810A-D. The video coder may be further configured to mark a decoded layer component in one of the plurality of sub-units as unused for reference, wherein marking the decoded layer component also marks an entire decoded access unit related to the decoded layer component as unused for reference.

While the example sub-units in the example of FIG. 8 were categorized by spatial resolution, other examples of the disclosure may use different categorization. For example, each of the plurality of sub-units may be associated with a different spatial resolution, chroma sampling format, bit depth, or any combination of spatial resolution, chroma sampling format and bit depth.

In another example of the disclosure, a video coder may be configured to decode video data to produce a plurality of decoded layer components. The video coder may be further configured to store the decoded layer components in one of a plurality of sub-units, wherein each of the plurality of sub-units is associated with a different fully reconstructed layer. For example, for 3D video coding, one sub-unit may be used to store texture view components, while another sub-unit may be used to store depth view components. As texture view components and depth view components typically have different resolutions, such a technique allows the independent management of decoded layers at different resolutions. That is, like the example of FIG. 8, each sub-unit may be managed separately.

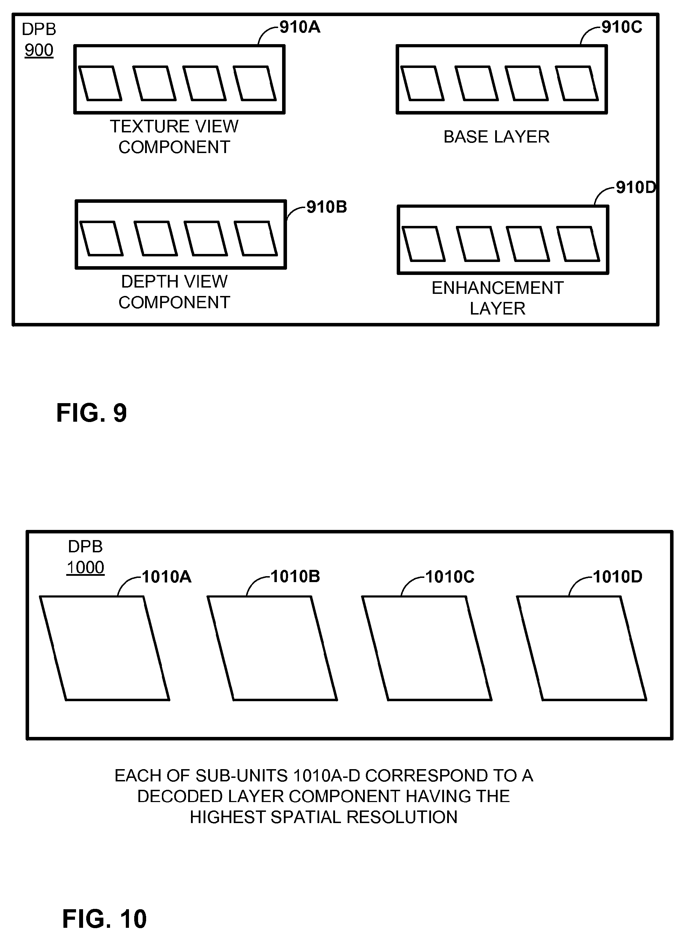

FIG. 9 is a conceptual diagram showing a DPB 900 configured to store different decoded layer components in different sub-units. Each of sub-units 910A-D represents storage locations for different types of decoded layer components at different resolutions. For example, sub-unit 910A may be used for storing texture view components, while sub-unit 910B may be used for storing depth view components. Similarly, sub-unit 910C may be used for storing base layers in a scalable video coding process, while sub-unit 910D may be used for storing one level of enhancement layers in a scalable video coding process. Additional sub-units may be configured to storing additional levels of enhancement layers or additional texture view components. Each of sub-units 910A-D contains separate units that are configured to store a decoded layer component associated with a picture.

The video coder may be further configured to remove decoded layer components from the plurality of sub-units 910A-D, wherein removing is managed separately for each sub-unit. The video coder may be further configured to mark decoded layer components as unused for reference in the plurality of sub-units 910A-D, wherein marking is managed separately for each sub-unit. The video coder may be further configured to remove a decoded layer component from one of the plurality of sub-units 910A-D, wherein removing the decoded layer component also removes an entire decoded access unit related to the decoded layer component from the one of the plurality of sub-units 910A-D. The video coder may be further configured to mark a decoded layer component in one of the plurality of sub-units 910A-D as unused for reference, wherein marking the decoded layer component also marks an entire decoded access unit related to the decoded layer component as unused for reference.

In another example of the disclosure, a video coder may be configured to decode video data to produce a plurality of decoded layer components, and store the decoded layer components in one of plurality of sub-units of a decoded picture buffer (DBP), such that each sub-unit of the DPB corresponds to a decoded layer component having the highest spatial resolution. That is, the size of each sub-units of the DPB is configured to be equal to the decoded layer component having the highest resolution. Each of the plurality of sub-units of the DPB may store one decoded layer component, regardless of the resolution of the decoded layer component.

FIG. 10 is a conceptual diagram showing a DPB 1000 configured to store decoded layer components. Each of sub-units 1010A-D represents a storage location for a decoded layer component, the size of each sub-units corresponding to the spatial resolution of the decoded layer component having the highest resolution. The video coder may be further configured to remove a decoded layer component from DPB 1000, wherein removing the decoded layer component also removes an entire decoded access unit related to the decoded layer component from DPB 1000. The video coder may be further configured to mark a decoded layer component in the DPB 1000 as unused for reference, wherein marking the decoded layer component also marks an entire decoded access unit related to the decoded layer component as unused for reference.

To summarize, in a first example of the disclosure, a single sub-unit of a DPB stores the union of the decoded layer components of all fully-reconstructed layers within an access unit. This first example may include one or more of the following techniques and/or structures:

- The size of the single sub-unit of a DPB may be determined by the sum of the number of samples of all components in all decoded layer components.
- Removal of a decoded picture includes the removal of a whole decoded access unit.
- Marking of decoded picture as "unused for reference" includes the marking of the whole decoded access unit as "unused for reference."

In a second example of the disclosure, the DPB may include multiple sub-units, each of which is associated with a different spatial resolution. Decoded layer components for each layer are managed separately (including both marking and removal). In addition, during the invocation of the DPB management process for an access unit in one particular layer, decoded layer components of other layers in the same access unit may be marked as "unused for reference" and removed from the sub-units for those decoded layer components. Alternatively, in addition, each sub-unit may be associated with a different combination of spatial resolutions, chroma sampling formats, and bit depths.

In a third example of the disclosure, a DPB may be configured to include multiple sub-units, each of which is associated with a different fully-reconstructed layer. Decoded layer components for each layer are separately managed (including both marking and removal). In addition, during the invocation of the DPB management process for an access unit in one particular layer, decoded layer components of other layers in the same access unit may be marked as "unused for reference" and removed from the sub-units for those decoded layer components.

In a fourth example of the disclosure, each sub-unit in a DPB corresponds to a decoded layer component of the layer with the largest resolution. Each sub-unit is used for storage of one decoded layer component regardless of the resolution of the decoded layer component. In addition, during the invocation of the DPB management process for an access unit in one particular layer, decoded layer components of other layers in the same access unit may be marked as "unused for reference" and removed from the DPB.

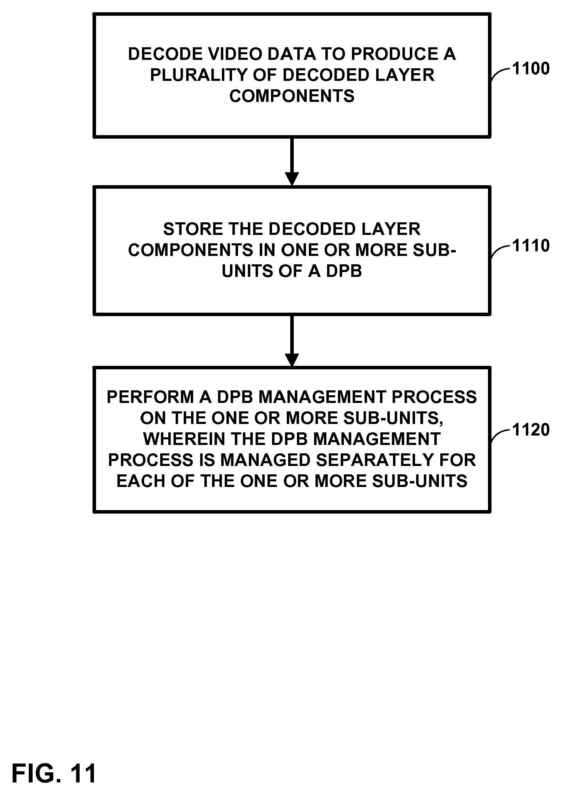

FIG. 11 is a flowchart showing an example method according to the techniques of this disclosure. The techniques of FIG. 11 may be executed by one or more functional units of video encoder 20 and/or video decoder 30, including, e.g., DPB 64 and DPB 92.

In one example of the disclosure, video encoder 20 and/or video decoder 30 may be configured to decode video data to produce a plurality of decoded layer components (1100), store the decoded layer components in one or more sub-units of a DPB (1110), and perform a DPB management process on the one or more sub-units, wherein the DPB management process is managed separately for each of the one or more sub-units (1120). In one example of the disclosure, the DPB management process comprises one or more of removing a decoded layer component from the sub-unit, and marking a decoded layer component in the sub-unit as unused for reference. In another example of the disclosure, video encoder 20 and/or video decoder 30 is further configured to perform the DPB management process on a first decoded layer component in an access unit, and perform the same DPB management process on other decoded layer components in the same access unit.

In one example of the disclosure, the decoded layer components have at least two different spatial resolutions. In this example, video encoder 20 and/or video decoder 30 is further configured to store the decoded layer components in one of the one or more sub-units of the DPB based on the spatial resolution of the decoded layer components, wherein each of the one or more sub-units is associated with a different spatial resolution. In another example, each of the one or more sub-units is associated with a particular combination of spatial resolution, Chroma sampling format, and bit depth.

In another example of the disclosure, the decoded layer components have at least two different spatial resolutions, and each of the one or more sub-units is associated with a different fully reconstructed layer.

In another example of the disclosure, video encoder 20 and/or video decoder 30 is further configured to store the decoded layer components in one of the one or more of sub-units of the DPB such that each sub-unit of the DPB corresponds to the decoded layer component having the highest spatial resolution. In one example, each of the one or more sub-units of the DPB stores one decoded layer component.

In another example of the disclosure, the one or more sub-units comprise a single sub-unit, and video encoder 20 and/or video decoder 30 is further configured to store the decoded layer components in the single sub-unit of the DPB such that the single sub-unit of the DPB contains a union of decoded layer components for a fully-reconstructed layer within an access unit. In another example, a size of the single sub-unit of the DPB is determined by the sum of a number of samples of all components in all decoded layer components.

The next section of the disclosure will describe an example hypothetical reference decoder (HRD) implementation (e.g., for HEVC, including scalable, multiview, and 3D extensions) for the first example techniques of this disclosure. That is, the following section applies to the techniques of the disclosure whereby the single sub-unit of a DPB stores the union of the decoded layer components of all fully-reconstructed layers within an access unit. The clauses and subclauses mentioned in this specification refer to the HRD specification in Annex C of the HEVC WD9 cited above.

### 4.1.1 HRD: Hypothetical reference decoder (Example #1)

### A.1 Operation of the decoded picture buffer (DPB)

The specifications in this subclause apply independently to each set of DPB parameters selected as specified in subclause C.1.

The decoded picture buffer contains picture storage buffers. Each of the picture storage buffers may contain a decoded picture that is marked as "used for reference" or is held for future output. Prior to initialization, the DPB is empty (the DPB fullness is set to zero). The following steps of the subclauses of this subclause happen in the sequence as listed below.

Each of the picture storage buffers contains all the decoded layer components (also referred to as layer representations in a scalable codec, all the decoded view components in MV-HEVC, or all decoded texture and depth view components in 3D-HEVC) of an access unit. Each decoded picture therefore is the decoded access unit. The memory size of a picture storage buffer corresponds to the decoded access unit that requires the maximum buffer size for storage of all the decoded layer components among all the access units in a coded video sequence. For example, if different access units have different numbers of layer components, then the maximum buffer size may be needed for storage of the access units that each have the maximum number of layer components among all the access units.

A decoded picture is marked as "used for reference" if and only if one or more layer components are marked as "used for reference."

A decoded picture is marked as "unused for reference" if and only if all layer components are marked as "unused for reference."

In addition, constraints may apply, as described in section 4.1.3.

Alternatively:

A decoded picture is marked as "used for reference" if and only if the layer component with the highest value of layer_id is marked as "used for reference."

A decoded picture is marked as "unused for reference" if and only if the layer component with the highest value of layer_id is marked as "unused for reference."

In addition, constraints may apply, as described in section 4.1.3.

In case multiple layer components of the same access unit can have different marking statuses, the marking status of each layer component is known after applying a decoded picture marking process for each layer component, in a way similar to the decoded picture picture marking process in HEVC.

In one alternative, multiple layer components may be also marked jointly, in this case, a process similar to decoded picture marking process in HEVC is invoked for the whole access unit.

A picture is instantaneous decoder refresh (IDR) if all layer components have nal_unit_type equal to IDR_W_DLP or IDR_N_LP.

A picture is broken link access (BLA) if all layer components have nal_unit_type equal to BLA_W_LP, BLA_W_DLP, or BLA_N_LP.

When nal_unit_type has a value in the range of 16 to 23, inclusive (random access picture (RAP)), slice_type shall be equal to 2 for the base layer (with layer_id equal to 0), but may be equal to other values if layer_id is greater than 0.

### A.1.1 Removal of pictures from the DPB

The removal of pictures from the DPB before decoding of the current picture (but after parsing the slice header of the first slice of the current picture) happens instantaneously at the CPB removal time of the first decoding unit of access unit n (containing the current picture) and proceeds as follows.

The decoding process for reference picture set as specified in subclause 8.3.2 is invoked.

If the current picture is an IDR or a BLA picture, the following applies:

When the IDR or BLA picture is not the first picture decoded and the value of pic_width_in_luma_samples or pic_height_in_luma_samples or sps_max_dec_pic_buffering[HighestTid] for any layer of the current access unit is different from the value of pic_width_in_luma_samples or pic_height_in_luma_samples or sps_max_dec_pic_buffering[HighestTid] derived when decoding the previous access unit, respectively, no_output_of_prior_pics_flag is inferred to be equal to 1 by the HRD, regardless of the actual value of no_output_of_prior_pics_flag.

When no_output_of_prior_pics_flag is equal to 1 or is inferred to be equal to 1, all picture storage buffers in the DPB are emptied without output of the pictures they contain, and DPB fullness is set to 0.

All pictures k in the DPB, for which all of the following conditions are true, are removed from the DPB:

- picture k is marked as "unused for reference",
- picture k has PicOutputFlag equal to 0 or its DPB output time is less than or equal to the CPB removal time of the first decoding unit (denoted as decoding unit m) of the current picture n; i.e. to,dpb(k) <= tr(m)

When a picture is removed from the DPB, the DPB fullness is decremented by one.

### A.1.2 Picture Output

The following happens instantaneously at the CPB removal time of access unit n, tr(n).

When picture n has PicOutputFlag equal to 1, its DPB output time to,dpb(n) is derived by

$$to,dpb(\ n\ ) = tr(\ n\ ) + tc * pic\_dpb\_output\_delay(\ n\ ) \qquad (C\ 15)$$

where pic_dpb_output_delay(n) is the value of pic_dpb_output_delay specified in the picture timing SEI message associated with access unit n.

The output of the current picture is specified as follows.

- If PicOutputFlag is equal to 1 and to,dpb(n) = tr(n), the current picture is output.

- Otherwise, if PicOutputFlag is equal to 0, the current picture is not output, but will be stored in the DPB as specified in subclause C.3.4.
- Otherwise (PicOutputFlag is equal to 1 and to,dpb(n) > tr(n)), the current picture is output later and will be stored in the DPB (as specified in subclause C.3.4) and is output at time to,dpb(n) unless indicated not to be output by the decoding or inference of no_output_of_prior_pics_flag equal to 1 at a time that precedes to,dpb(n ).

When output, the picture shall be cropped, using the conformance cropping window specified in the active sequence parameter set.

When picture n is a picture that is output and is not the last picture of the bitstream that is output, the value of Dto,dpb(n) is defined as:

$$Dto,dpb(\ n\ ) = to,dpb(\ nn\ ) - to,dpb(\ n\ ) \qquad (C\ 16)$$

where nn indicates the picture that follows picture n in output order and has PicOutputFlag equal to 1.

### A.1.3 Current decoded picture marking and storage

The following happens instantaneously at the CPB removal time of access unit n, tr(n).

The current decoded picture is stored in the DPB in an empty picture storage buffer, the DPB fullness is incremented by one, and the current picture is marked as "used for short-term reference".

### A.2 Bitstream conformance

The specifications in subclause C.2 apply

### A.3 Decoder conformance

### A.3.1 General

The specifications in C.5.1 apply with the following additions.

Each of the picture storage buffers contains all the decoded layer components (also referred to as layer representations in a scalable codec, all the decoded view components in MV-HEVC, or all decoded texture and depth view components in 3D-HEVC) of an access unit. Each decoded picture therefore is the decoded access unit. The memory size of a picture storage buffer corresponds to the decoded access unit that requires the maximum buffer size for storage of all the decoded layer components among all the access units in a coded video sequence. For example, if different access units have different numbers of layer components, then the maximum buffer size may be needed for storage of the access units that each has the maximum number of layer components among all the access units.

The following is an example of one alternative for the marking status of layer components. A decoded picture is marked as "used for reference" if and only if one or more layer components are marked as "used for reference." A decoded picture is marked as "unused for reference" if and only if all layer components are marked as "unused for reference." In addition, constraints may apply, as described in section 4.1.3.

The following is an example of another alternative for the marking status of layer components. A decoded picture is marked as "used for reference" if and only if the layer component with the highest value of layer_id is marked as "used for reference." A decoded picture is marked as "unused for reference" if and only if the layer component with the highest value of layer_id is marked as "unused for reference." In addition, constraints may apply, as described in section 4.1.3.

A picture is IDR if all layer components have nal_unit_type equal to IDR_W_DLP or IDR_N_LP.

A picture is BLA if all layer components have nal_unit_type equal to BLA_W_LP, BLA_W_DLP, or BLA_N_LP.

When nal_unit_type has a value in the range of 16 to 23, inclusive (RAP picture), slice_type shall be equal to 2 for the base layer (with layer_id equal to 0), but may be equal to other values if layer_id is greater than 0.

### A.3.2 Operation of the output order DPB

The decoded picture buffer contains picture storage buffers. Each of the picture storage buffers contains a decoded picture that is marked as "used for reference" or is held for future output. At HRD initialization, the DPB is empty. The following steps happen in the order as listed below.

### A.3.3 Output and Removal of pictures from the DPB

The output and removal of pictures from the DPB before decoding of the current picture (but after parsing the slice header of the first slice of the current picture) happens instantaneously when the first decoding unit of the access unit containing the current picture is removed from the CPB and proceeds as follows.

The decoding process for reference picture set as specified in subclause 8.3.2 is invoked.

- If the current picture is an IDR or a BLA picture, the following applies.

  1. When the IDR or BLA picture is not the first picture decoded and the value of pic_width_in_luma_samples or pic_height_in_luma_samples or sps_max_dec_pic_buffering[HighestTid] of each layer of the current access unit is different from the value of pic_width_in_luma_samples or pic_height_in_luma_samples or sps_max_dec_pic_buffering[HighestTid] of each layer derived for the previous access unit, respectively, no_output_of_prior_pics_flag is inferred to be equal to 1 by the HRD, regardless of the actual value of no_output_of_prior_pics_flag.
  NOTE - Decoder implementations should try to handle picture or DPB size changes more gracefully than the HRD in regard to changes in pic_width_in_luma_samples, pic_height_in_luma_samples or sps_max_dec_pic_buffering[HighestTid].
  2. When no_output_of_prior_pics_flag is equal to 1 or is inferred to be equal to 1, all picture storage buffers in the DPB are emptied without output of the pictures they contain.
  3. When no_output_of_prior_pics_flag is not equal to 1 and is not inferred to be equal to 1, picture storage buffers containing a picture that is marked as "not needed for output" and "unused for reference" are emptied (without output), and all non-empty picture storage buffers in the DPB are emptied by repeatedly invoking the "bumping" process specified in subclause C.5.3.1.

- Otherwise (the current picture is not an IDR or a BLA picture), picture storage buffers containing a picture which are marked as "not needed for output" and "unused for reference" are emptied (without output). When one or more of the following conditions are true, the "bumping" process specified in subclause C.5.3.1 is invoked repeatedly until there is an empty picture storage buffer to store the current decoded picture.

  1. The number of pictures in the DPB that are marked as "needed for output" is greater than sps_max_num_reorder_pics[HighestTid],
  2. The number of pictures in the DPB is equal to sps_max_dec_pic_buffering[HighestTid].
  Note that pic_width_in_luma_samples or pic_height_in_luma_samples or sps_max_dec_pic_buffering[ HighestTid] of each layer of an access unit may be either signaled in the sequence parameter sets or the active video parameter set referred by the current access unit.

### A.3.3.1 "Bumping" process

The "bumping" process is invoked in the following cases.

- The current picture is an IDR or a BLA picture and no_output_of_prior_pics_flag is not equal to 1 and is not inferred to be equal to 1, as specified in subclause C.5.2.
- The number of pictures in the DPB that are marked "needed for output" is greater than sps_max_num_reorder_pics[TemporalId], as specified in subclause C.5.2.
- The number of pictures in the DPB with TemporalId lower than or equal to the TemporalId of the current picture is equal to sps_max_dec_pic_buffering[ TemporalId], as specified in subclause C.5.2.

The "bumping" process consists of the following ordered steps:

  1. The picture that is first for output is selected as the one having the smallest value of PicOrderCntVal of all pictures in the DPB marked as "needed for output."
  2. The picture is cropped, using the cropping rectangle specified in the active sequence parameter set for the picture, the cropped picture is output, and the picture is marked as "not needed for output."
  3. If the picture storage buffer that included the picture that was cropped and output contains a picture marked as "unused for reference", the picture storage buffer is emptied.

### A.3.4 Picture decoding, marking and storage

The following happens instantaneously when the last decoding unit of access unit n containing the current picture is removed from the CPB.

The current picture is considered as decoded after the last decoding unit of the picture is decoded. The current decoded picture is stored in an empty picture storage buffer in the DPB, and the following applies.

- If the current decoded picture has PicOutputFlag equal to 1, it is marked as "needed for output."
- Otherwise (the current decoded picture has PicOutputFlag equal to 0), it is marked as "not needed for output."

The current decoded picture is marked as "used for short-term reference."

### 4.1.2 Maximum luma picture size in Annex A: Profiles, tiers and levels

MaxLumaPS as specified in Table A1 may correspond to the maximum sum of the luma picture size (AUMax-LumaPS) of each layer in the access unit.

Alternatively, the same value of level in the HEVC base specification may be used to indicate extensions, wherein one layer requires the same level. In this case, the following two aspects may apply:

- MaxLumaPS corresponds to the maximum luma picture size of the highest layer in scalable extension or the texture view with the highest spatial resolution in multiview or 3DV extension;
- A scaling factor is introduced and calculated based on the AUMaxLumaPS/MaxLumaPS and taking into consideration when deriving e.g., the DPB size and other level related constraints.

As mentioned above, the scaling factor could be derived as the sum of sample numbers of all layer components divided by the max sample numbers of one layer component. Alternatively, the scaling factor may be calculated by taking into consideration of the chroma sampling format and bit depth values for both luma and chroma components.

Various approaches may be used to define the DPB size which may be related to the scaling factor.

In one approach, the "DPB size" is indicative of physical memory size, and thus the scaling factor scales down the number of pictures that can be stored.

Alternatively, in a different approach, the "DPB size" is indicative of how many AUs that can be stored, thus the scaling factor scales up the physical memory size (compared to having the base layer only).

### 4.1.3 Constraints for marking status of layer components reference picture set

Alternative #1

In scalable extension of HEVC, the reference picture set, excluding the pictures that are generated during the decoding of the same access unit, of each layer is constrained as follows:

The RPS of each layer component i, denoted as RPSi is a superset of any RPSj, wherein the layer component j (of the same access unit) has a smaller layer_id, meaning any picture identification (POC) that is included in RPSj shall also be included in RPSi.

Alternatively, that RPS for each layer component should be the same. In this case, only AU based signaling of RPS is needed for inter prediction references. The AU based signaling may be done in a way that only the base layer component contains RPS syntax elements. Alternatively, the AU based signaling may be done in a way that only each independent layer components contains RPS syntax elements.

Note that a reference picture set includes RefPicSetLtCurr, RefPicSetLtFoll, RefPicSetStCurrBefore, RefPic-SetStCurrAfter and RefPicSetStFoll.

Similarly, in MV-HEVC, the reference picture set, excluding the reference pictures that generated during the decoding of the same access unit, of each view component is constrained as follows:

The RPS of the layer component i, denoted as RPSi is a superset of any RPSj, wherein the layer component j (of the same access unit) has a smaller layer_id, meaning any picture identification (POC) that is in RPSi shall not be included in RPSj.

Alternatively, that RPS for each layer component should be the same. In this case, only AU based signaling of RPS is needed for inter prediction references. The AU based signaling may be done in a way that only the base layer component contains RPS syntax elements. Alternatively, the AU based signaling may be done in a way that only each independent layer components contains RPS syntax elements.

In 3D-HEVC, the following constrains may apply:

The RPS of each texture view component i, denoted as RPSi is a superset of any RPSj, wherein the texture view component j (of the same access unit) has a smaller layer_id.

The RPS of each depth view component i, denoted as RPSi is a superset of any RPSj, wherein the depth view component j (of the same access unit) has a smaller layer_id.

The RPS of a texture view component, denoted as RPSt is a superset of RPSd, the RPS of the depth view component of the same view.

Alternatively, regardless whether a view component is texture or depth, the RPS of the layer component i, denoted as RPSi is a superset of any RPSj, wherein the layer component j (of the same access unit) has a smaller layer_id.

**Alternative #2**

All layer components of the same access unit share the same RPS.

For example, RPS for each layer component should be the same. In addition, alternatively, only AU based signaling of RPS is needed for inter prediction references. The AU based signaling may be done in a way that only the base layer component contains RPS syntax elements. Alternatively, the AU based signaling may be done in a way that only each independent layer component contains RPS syntax elements.

The next section of the disclosure will describe another example hypothetical reference decoder (HRD) implementation (e.g., for HEVC, including scalable, multiview, and 3D extensions) for the second example techniques of this disclosure. That is, the following section applies to the techniques of the disclosure whereby the DPB consists of multiple sub-DPBs, each is associated with a different spatial resolution, and decoded layer components for each layer are separately managed. The clauses and sub-clauses mentioned in this specification refer to the HRD specification in Annex C of the HEVC WD9 cited above.

**4.2.1 HRD: Hypothetical reference decoder (Example #2)**

**A.4 Operation of the decoded picture buffer (DPB)**

The specifications in this subclause apply independently to each set of DPB parameters selected as specified in subclause C.1.

The decoded picture buffer contains picture storage buffers. Each of the picture storage buffers may contain a decoded layer component that is marked as "used for reference" or is held for future output.

The decoded picture buffer consists of one or more sub decoded picture buffer (SDPB), each is associated with a different spatial resolution. Prior to initialization, each SDPB is empty (the SDPB fullness is set to zero).

The following steps of the subclauses of this subclause happen in the sequence as listed below, and are repeatedly invoked, each time for one layer, in decoding order, and during the invocation, "DPB" is replaced with "SDPB", and "decoded picture" is replaced with "decoded layer component".

A picture is IDR if all layer components have nal unit type equal to IDR_W_DLP or IDR_N_LP.

A picture is BLA if all layer components have nal_unit_type equal to BLA_W_LP, BLA_W_DLP, or BLA_N_LP.

When nal_unit_type has a value in the range of 16 to 23, inclusive (RAP picture), slice_type shall be equal to 2 for the base layer (with layer_id equal to 0), but may be equal to other values if layer_id is greater than 0.

**A.4.1 Removal of pictures from the DPB**

The removal of pictures from the DPB before decoding of the current picture (but after parsing the slice header of the first slice of the current picture) happens instantaneously at the CPB removal time of the first decoding unit of access unit n (containing the current picture) and proceeds as follows.

The decoding process for reference picture set as specified in subclause 8.3.2 is invoked.

If the current picture is an IDR or a BLA picture, the following applies:

1. When the IDR or BLA picture is not the first picture decoded and the value of pic_width_in_luma_samples or pic_height_in_luma_samples or sps_max_dec_pic_buffering[HighestTid] for any layer of the current access unit is different from the value of pic_width_in_luma_samples or pic_height_in_luma_samples or sps_max_dec_pic_buffering[HighestTid] derived when decoding the previous access unit, respectively, no_output_of_prior_pics_flag is inferred to be equal to 1 by the HRD, regardless of the actual value of no_output_of_prior_pics_flag.

NOTE - Decoder implementations should try to handle picture or DPB size changes more gracefully than the HRD in regard to changes in pic_width_in_luma_samples, pic_height_in_luma_samples, or sps_max_dec_pic_buffering[i].

2. When no_output_of_prior_pics_flag is equal to 1 or is inferred to be equal to 1, all picture storage buffers in the DPB are emptied without output of the pictures they contain, and DPB fullness is set to 0.

All pictures k in the DPB, for which all of the following conditions are true, are removed from the DPB:

- picture k is marked as "unused for reference",
- picture k has PicOutputFlag equal to 0 or its DPB output time is less than or equal to the CPB removal time of the first decoding unit (denoted as decoding unit m) of the current picture n; i.e. to,dpb(k) <= tr(m)

When a picture is removed from the DPB, the DPB fullness is decremented by one.

### A.4.2 Picture output

The following happens instantaneously at the CPB removal time of access unit n, tr(n).

When picture n has PicOutputFlag equal to 1, its DPB output time to,dpb(n) is derived by

$$\text{to,dpb}(\,n\,) = \text{tr}(\,n\,) + \text{tc} * \text{pic\_dpb\_output\_delay}(\,n\,) \qquad (C\ 15)$$

where pic_dpb_output_delay(n) is the value of pic_dpb_output_delay specified in the picture timing SEI message associated with access unit n.

The output of the current picture is specified as follows.

- If PicOutputFlag is equal to 1 and to,dpb(n)=tr(n), the current picture is output.
- Otherwise, if PicOutputFlag is equal to 0, the current picture is not output, but will be stored in the DPB as specified in subclause C.3.4.
- Otherwise (PicOutputFlag is equal to 1 and to,dpb(n)>tr(n)), the current picture is output later and will be stored in the DPB (as specified in subclause C.3.4) and is output at time to,dpb(n) unless indicated not to be output by the decoding or inference of no_output_of_prior_pics_flag equal to 1 at a time that precedes to,dpb(n ).

When output, the picture shall be cropped, using the conformance cropping window specified in the active sequence parameter set.

When picture n is a picture that is output and is not the last picture of the bitstream that is output, the value of Dto,dpb(n) is defined as:

$$\text{Dto,dpb}(\,n\,) = \text{to,dpb}(\,nn\,) - \text{to,dpb}(\,n\,) \qquad\qquad (C\ 16)$$

where nn indicates the picture that follows picture n in output order and has PicOutputFlag equal to 1.

### A.4.3 Current decoded picture marking and storage

The following happens instantaneously at the CPB removal time of access unit n, tr(n).

The current decoded picture is stored in the DPB in an empty picture storage buffer, the DPB fullness is incremented by one, and the current picture is marked as "used for short-term reference".

### A.5 Bitstream conformance

The specifications in subclause C.2 apply.

**A.6 Decoder conformance**

**A.6.1. General**

The specifications in C.5.1 apply with the following additions.

The decoded picture buffer contains picture storage buffers. Each of the picture storage buffers may contain a decoded layer component that is marked as "used for reference" or is held for future output.

The decoded picture buffer may include one or more sub decoded picture buffer (SDPB), each is associated with a different spatial resolution. Prior to initialization, each SDPB is empty (the SDPB fullness is set to zero).

The following steps of the subclauses of this subclause happen in the sequence as listed below, and are repeatedly invoked, each time for one layer, in decoding order, and during the invocation, "DPB" is replaced with "SDPB", and "decoded picture" is replaced with "decoded layer component".

A picture is IDR if it is a layer component that has nal_unit_type equal to IDR_W_DLP or IDR_N_LP.

A picture is BLA if it is a layer component that has nal_unit_type equal to BLA_W_LP, BLA_W_DLP, or BLA_N_LP.

When nal_unit_type has a value in the range of 16 to 23, inclusive (RAP picture), slice_type shall be equal to 2 for the base layer (with layer_id equal to 0), but may be equal to other values if layer_id is greater than 0.

**A.6.2 Operation of the output order DPB**

The decoded picture buffer contains picture storage buffers. Each of the picture storage buffers contains a decoded picture that is marked as "used for reference" or is held for future output. At HRD initialization, the DPB is empty. The following steps happen in the order as listed below.

**A.6.3 Output and Removal of pictures from the DPB**

The output and removal of pictures from the DPB before decoding of the current picture (but after parsing the slice header of the first slice of the current picture) happens instantaneously when the first decoding unit of the access unit containing the current picture is removed from the CPB and proceeds as follows.

The decoding process for reference picture set as specified in subclause 8.3.2 is invoked.

- If the current picture is an IDR or a BLA picture, the following applies.

    1. When the IDR or BLA picture is not the first picture decoded and the value of pic_width_in_luma_samples or pic_height_in_luma_samples or sps_max_dec_pic_buffering[HighestTid] of each layer of the current access unit is different from the value of pic_width_in_luma_samples or pic_height_in_luma_samples or sps_max_dec_pic_buffering[HighestTid] of each layer derived for the previous access unit, respectively, no_output_of_prior_pics_flag is inferred to be equal to 1 by the HRD, regardless of the actual value of no_output_of_prior_pics_flag.
    2. When no_output_of_prior_pics_flag is equal to 1 or is inferred to be equal to 1, all picture storage buffers in the DPB are emptied without output of the pictures they contain.
    3. When no_output_of_prior_pics_flag is not equal to 1 and is not inferred to be equal to 1, picture storage buffers containing a picture that is marked as "not needed for output" and "unused for reference" are emptied (without output), and all non-empty picture storage buffers in the DPB are emptied by repeatedly invoking the "bumping" process specified in subclause C.5.3.1.

- Otherwise (the current picture is not an IDR or a BLA picture), picture storage buffers containing a picture which are marked as "not needed for output" and "unused for reference" are emptied (without output). When one or more of the following conditions are true, the "bumping" process specified in subclause C.5.3.1 is invoked repeatedly until there is an empty picture storage buffer to store the current decoded picture.

    3. The number of pictures in the DPB that are marked as "needed for output" is greater than sps_max_num_reorder_pics[HighestTid],
    4. The number of pictures in the DPB is equal to sps_max_dec_pic_buffering[HighestTid].
    Note that pic_width_in_luma_samples or pic_height_in_luma_samples or sps_max_dec_pic_buffering[ HighestTid] of each layer of an access unit may be either signaled in the sequence parameter sets or the active video parameter set referred by the current access unit.

## A.6.3.1 "Bumping" process

The "bumping" process is invoked in the following cases.

- The current picture is an IDR or a BLA picture and no_output_of_prior_pics_flag is not equal to 1 and is not inferred to be equal to 1, as specified in subclause C.5.2.
- The number of pictures in the DPB that are marked "needed for output" is greater than sps_max_num_reorder_pics[TemporalId], as specified in subclause C.5.2.
- The number of pictures in the DPB with TemporalId lower than or equal to the TemporalId of the current picture is equal to sps_max_dec_pic_buffering[ TemporalId], as specified in subclause C.5.2.

The "bumping" process may include of the following ordered steps:

1. The picture that is first for output is selected as the one having the smallest value of PicOrderCntVal of all pictures in the DPB marked as "needed for output".
2. The picture is cropped, using the cropping rectangle specified in the active sequence parameter set for the picture, the cropped picture is output, and the picture is marked as "not needed for output".
3. If the picture storage buffer that included the picture that was cropped and output contains a picture marked as "unused for reference", the picture storage buffer is emptied.

## A.6.4 Picture decoding, marking and storage

The following happens instantaneously when the last decoding unit of access unit n containing the current picture is removed from the CPB.

The current picture is considered as decoded after the last decoding unit of the picture is decoded. The current decoded picture is stored in an empty picture storage buffer in the DPB, and the following applies.

- If the current decoded picture has PicOutputFlag equal to 1, it is marked as "needed for output."
- Otherwise (the current decoded picture has PicOutputFlag equal to 0), it is marked as "not needed for output."

The current decoded picture is marked as "used for short-term reference."

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

**Claims**

1.    A method of processing video data, the method comprising:

decoding (1100) video data to produce a plurality of decoded layer components, each decoded layer component being of a type, wherein types of the plurality of decoded layer components include at least one of a texture view of multi-view video data, a depth view of multi-view video data, a base layer of scalable video data, or each of one or more enhancement layers of scalable video data; **characterised by**
storing (1110) the plurality of decoded layer components in sub-units of a decoded picture buffer (DPB) such that a different type of decoded layer component is stored in each respective sub-unit; and
performing (1120) a DPB management process on the sub-units, wherein the DPB management process is managed independently for each of the sub-units.

2.    The method of claim 1, wherein the DPB management process comprises one or more of removing a decoded layer component of the plurality of decoded layer components from the respective sub-unit, or marking a decoded layer component of the plurality of decoded layer components in the respective sub-unit as unused for reference.

3.    The method of claim 2, wherein performing the DPB management process on the sub-units comprises:

performing the DPB management process on a first decoded layer component in an access unit; and
performing the DPB management process on other decoded layer components in the access unit.

4.    An apparatus configured to process video data, the apparatus comprising:

a video decoder configured to:

decode video data to produce a plurality of decoded layer components, each decoded layer component being of a type, wherein types of the plurality of decoded layer components include at least one of a texture view of multi-view video data, a depth view of multi-view video data, a base layer of scalable video data, or each of one or more enhancement layers of scalable video data; **characterised by** store the plurality of decoded layer components in sub-units of a decoded picture buffer (DPB) such that a different type of decoded layer component is stored in each respective sub-unit; and
perform a DPB management process on the sub-units, wherein the DPB management process is managed independently for each of the sub-units.

5.    The apparatus of claim 4, wherein the DPB management process comprises one or more of removing a decoded layer component of the plurality of decoded layer components from the respective sub-unit, or marking a decoded layer component of the plurality of decoded layer components in the respective sub-unit as unused for reference.

6.    The apparatus of claim 5, wherein the video coder is further configured to:

perform the DPB management process on a first decoded layer component in an access unit; and
perform the DPB management process on other decoded layer components in the access unit.

7.    An apparatus configured to process video data, the apparatus comprising:

means for decoding video data to produce a plurality of decoded layer components, each decoded layer component being of a type, wherein types of the plurality of decoded layer components include at least one of a texture view of multi-view video data, a depth view of multi-view video data, a base layer of scalable video data, or each of one or more enhancement layers of scalable video data; **characterised by**
means for storing the plurality of decoded layer components in sub-units of a decoded picture buffer (DPB) such that a different type of decoded layer component is stored in each respective sub-unit; and
means for performing a DPB management process on the sub-units, wherein the DPB management process is managed independently for each of the sub-units.

8. The apparatus of claim 7, wherein the DPB management process comprises one or more of removing a decoded layer component of the plurality of decoded layer components from the respective sub-unit, or marking a decoded layer component of the plurality of decoded layer components in the respective sub-unit as unused for reference.

9. The apparatus of claim 8, wherein the means for performing the DPB management process on the sub-units comprises:

means for performing the DPB management process on a first decoded layer component in an access unit; and
means for performing the DPB management process on other decoded layer components in the access unit.

10. A computer-readable storage medium storing instructions that, when executed, cause one or more processors of a device configured to process video data to:

decode video data to produce a plurality of decoded layer components, each decoded layer component being of a type, wherein types of the plurality of decoded layer components include at least one of a texture view of multi-view video data, a depth view of multi-view video data, a base layer of scalable video data, or each of one or more enhancement layers of scalable video data; **characterised by**
store the plurality of decoded layer components in sub-units of a decoded picture buffer (DPB) such that a different type of decoded layer component is stored in each respective sub-unit; and
perform a DPB management process on the sub-units, wherein the DPB management process is managed independently for each of the sub-units.

11. The computer-readable storage medium of claim 10, wherein the DPB management process comprises one or more of removing a decoded layer component of the plurality of decoded layer components from the sub-unit, or marking a decoded layer component of the plurality of decoded layer components in the sub-unit as unused for reference.

12. The computer-readable storage medium of claim 11, wherein the instructions further cause the one or more processors to:

perform the DPB management process on a first decoded layer component in an access unit; and
perform the DPB management process on other decoded layer components in the access unit.


**Patentansprüche**

1. Verfahren zum Verarbeiten von Videodaten, wobei das Verfahren Folgendes beinhaltet:

Decodieren (1100) von Videodaten zum Erzeugen von mehreren decodierten Schichtkomponenten, wobei jede decodierte Schichtkomponente von einem Typ ist, wobei Typen der mehreren decodierten Schichtkomponenten wenigstens eines aus einer Texturansicht von Mehransichts-Videodaten, einer Tiefenansicht von Mehransichts-Videodaten, einer Basisschicht von skalierbaren Videodaten und jeder von einer oder mehreren Erweiterungsschichten von skalierbaren Videodaten beinhalten; **gekennzeichnet durch**
Speichern (1110) der mehreren decodierten Schichtkomponenten in Subeinheiten eines decodierten Bildpuffers (DPB), so dass ein anderer Typ von decodierter Schichtkomponente in jeder jeweiligen Subeinheit gespeichert wird; und
Ausführen (1120) eines DPB-Managementprozesses an den Subeinheiten, wobei der DPB-Managementprozess unabhängig von jeder der Subeinheiten verwaltet wird.

2. Verfahren nach Anspruch 1, wobei der DPB-Managementprozess eines oder mehrere aus Entfernen einer decodierten Schichtkomponente der mehreren decodierten Schichtkomponenten aus der jeweiligen Subeinheit und Markieren einer decodierten Schichtkomponente der mehreren decodierten Schichtkomponenten in der jeweiligen Subeinheit als unbenutzt zur Referenz beinhaltet.

3. Verfahren nach Anspruch 2, wobei das Durchführen des DPB-Managementprozesses an den Subeinheiten Folgendes beinhaltet:

> Durchführen des DPB-Managementprozesses an einer ersten decodierten Schichtkomponente in einer Zugangseinheit; und
> Durchführen des DPB-Managementprozesses an anderen decodierten Schichtkomponenten in der Zugangseinheit.

4. Vorrichtung, konfiguriert zum Verarbeiten von Videodaten, wobei die Vorrichtung Folgendes umfasst:

> einen Video-Decoder, konfiguriert zum:

> > Decodieren von Videodaten zum Erzeugen von mehreren decodierten Schichtkomponenten, wobei jede decodierte Schichtkomponente von einem Typ ist, wobei Typen der meheren decodierten Schichtkomponenten wenigstens eines aus einer Texturansicht von Mehransichts-Videodaten, einer Tiefenansicht von Mehransichts-Videodaten, einer Basisschicht von skalierbaren Videodaten und jeder von einer oder mehreren Erweiterungsschichten von skalierbaren Videodaten beinhalten; **gekennzeichnet durch**
> > Speichern der mehreren decodierten Schichtkomponenten in Subeinheiten eines decodierten Bildpuffers (DPB), so dass ein anderer Typ von decodierter Schichtkomponente in jeder jeweiligen Subeinheit gespeichert wird; und
> > Durchführen eines DPB-Managementprozesses an den Subeinheiten, wobei der DPB-Managementprozess unabhängig von jeder der Subeinheiten verwaltet wird.

5. Vorrichtung nach Anspruch 4, wobei der DPB-Managementprozess eines oder mehrere aus Entfernen einer decodierten Schichtkomponente aus den mehreren decodierten Schichtkomponenten aus der jeweiligen Subeinheit und Markieren einer decodierten Schichtkomponente der mehreren decodierten Schichtkomponenten in der jeweiligen Subeinheit als unbenutzt zur Referenz beinhaltet.

6. Vorrichtung nach Anspruch 5, wobei der Video-Coder ferner konfiguriert ist zum:

> Durchführen des DPB-Managementprozesses an einer ersten decodierten Schichtkomponente in einer Zugangseinheit; und
> Durchführen des DPB-Managementprozesses an anderen decodierten Schichtkomponenten in der Zugangseinheit.

7. Vorrichtung, konfiguriert zum Verarbeiten von Videodaten, wobei die Vorrichtung Folgendes umfasst:

> Mittel zum Decodieren von Videodaten zum Erzeugen von mehreren decodierten Schichtkomponenten, wobei jede decodierte Schichtkomponente von einem Typ ist, wobei Typen der mehreren decodierten Schichtkomponenten wenigstens eines aus einer Texturansicht von Mehransichts-Videodaten, einer Tiefenansicht von Mehransichts-Videodaten, einer Basisschicht von skalierbaren Videodaten und jeder von einer oder mehreren Erweiterungsschichten von skalierbaren Videodaten beinhalten; **gekennzeichnet durch**
> Mittel zum Speichern der mehreren decodierten Schichtkomponenten in Subeinheiten eines decodierten Bildpuffers (DPB), so dass ein anderer Typ von decodierter Schichtkomponente in jeder jeweiligen Subeinheit gespeichert wird; und
> Mittel zum Durchführen eines DPB-Managementprozesses an den Subeinheiten, wobei der DPB-Managementprozess unabhängig von jeder der Subeinheiten verwaltet wird.

8. Vorrichtung nach Anspruch 7, wobei der DPB-Managementprozess eines oder mehrere aus Entfernen einer decodierten Schichtkomponente der mehreren decodierten Schichtkomponenten von der jeweiligen Subeinheit und Markieren einer decodierten Schichtkomponente der mehreren decodierten Schichtkomponenten in der jeweiligen Subeinheit als unbenutzt zur Referenz beinhaltet.

9. Vorrichtung nach Anspruch 8, wobei das Mittel zum Durchführen des DPB-Managementprozesses an den Subeinheiten Folgendes umfasst:

Mittel zum Durchführen des DPB-Managementprozesses an einer ersten decodierten Schichtkomponente in einer Zugangseinheit; und
Mittel zum Durchführen des DPB-Managementprozesses an anderen decodierten Schichtkomponenten in der Zugangseinheit.

10. Computerlesbares Speichermedium, auf dem Befehle gespeichert sind, die bei Ausführung bewirken, dass ein oder mehrere Prozessoren eines zum Verarbeiten von Videodaten konfigurierten Gerätes Folgendes ausführt/-en:

Decodieren von Videodaten zum Erzeugen von mehreren decodierten Schichtkomponenten, wobei jede decodierte Schichtkomponente von einem Typ ist, wobei Typen der meheren decodierten Schichtkomponenten wenigstens eines aus einer Texturansicht von Mehransichts-Videodaten, einer Tiefenansicht von Mehransichts-Videodaten, einer Basisschicht von skalierbaren Videodaten und jeder von einer oder mehreren Erweiterungsschichten von skalierbaren Videodaten beinhalten; **gekennzeichnet durch**
Speichern der mehreren decodierten Schichtkomponenten in Subeinheiten eines decodierten Bildpuffers (DPB), so dass ein anderer Typ von decodierter Schichtkomponente in jeder jeweiligen Subeinheit gespeichert wird; und
Durchführen eines DPB-Managementprozesses an den Subeinheiten, wobei der DPB-Managementprozess unabhängig von jeder der Subeinheiten verwaltet wird.

11. Computerlesbares Speichermedium nach Anspruch 10, wobei der DPB-Managementprozess eines oder mehrere aus Entfernen einer decodierten Schichtkomponente der mehreren decodierten Schichtkomponenten aus der Subeinheit und Markieren einer decodierten Schichtkomponente der mehreren decodierten Schichtkomponenten in der Subeinheit wie unbenutzt zur Referenz beinhaltet.

12. Computerlesbares Speichermedium nach Anspruch 11, wobei die Befehle ferner bewirken, dass die ein oder mehreren Prozessoren Folgendes ausführen:

Durchführen des DPB-Managementprozesses an einer ersten decodierten Schichtkomponente in einer Zugangseinheit; und
Durchführen des DPB-Managementprozesses an anderen decodierten Schichtkomponenten in der Zugangseinheit.

**Revendications**

1. Procédé de traitement de données vidéo, le procédé comprenant :

le décodage (1100) de données vidéo pour produire une pluralité de composants de couches décodées, chaque composant de couche décodée comportant au moins l'une d'une vue de texture de données vidéo multivue, d'une vue en profondeur de données vidéos multivue, d'une couche de base de données vidéo échelonnables, ou de chacune d'une ou de plusieurs couches de rehaussement de données vidéo échelonnables ; **caractérisé par**
la mémorisation (1110) de la pluralité de composants de couches décodées dans des sous-unités d'une mémoire tampon d'images décodées (DPB) de telle sorte qu'un type différent de composant de couche décodée soit mémorisé dans chaque sous-unité respective ; et
l'exécution (1120) d'un processus de gestion de mémoire DPB sur les sous-unités, le processus de gestion de mémoire DPB étant géré indépendamment pour chacune des sous-unités.

2. Procédé selon la revendication 1, dans lequel le processus de gestion de mémoire DPB comprend l'un ou plusieurs de la suppression d'un composant de couche décodée de la pluralité de composants de couches décodées de la sous-unité respective, ou du marquage d'un composant de couche décodée de la pluralité de composants de couches décodées dans la sous-unité respective comme étant inutilisé en référence.

3. Procédé selon la revendication 2, dans lequel l'exécution du processus de gestion de mémoire DPB sur les sous-unités comprend :

l'exécution du processus de gestion de mémoire DPB sur un premier composant de couche décodée dans une unité d'accès ; et

l'exécution du processus de gestion de mémoire DPB sur d'autres composants de couches décodées dans l'unité d'accès.

4.  Appareil configuré pour traiter des données vidéo, l'appareil comprenant :

un décodeur vidéo configuré pour :

décoder des données vidéo pour produire une pluralité de composants de couches décodées, chaque composant de couche décodée étant d'un type, dans lequel les types de la pluralité de composants de couches décodées comportent au moins l'une d'une vue de texture de données vidéo multivue, d'une vue en profondeur de données vidéos multivue, d'une couche de base de données vidéo échelonnables, ou de chacune d'une ou de plusieurs couches de rehaussement de données vidéo échelonnables ; **caractérisé par**

la mémorisation de la pluralité de composants de couches décodées dans des sous-unités d'une mémoire tampon d'images décodées (DPB) de telle sorte qu'un type différent de composant de couche décodée soit mémorisé dans chaque sous-unité respective ; et

l'exécution d'un processus de gestion de mémoire DPB sur les sous-unités, le processus de gestion de mémoire DPB étant géré indépendamment pour chacune des sous-unités.

5.  Appareil selon la revendication 4, dans lequel le processus de gestion de mémoire DPB comprend l'un ou plusieurs de la suppression d'un composant de couche décodée de la pluralité de composants de couches décodées de la sous-unité respective, ou du marquage d'un composant de couche décodée de la pluralité de composants de couches décodées dans la sous-unité respective comme étant inutilisé en référence.

6.  Appareil selon la revendication 5, dans lequel le codeur vidéo est configuré pour:

exécuter le processus de gestion de mémoire DPB sur un premier composant de couche décodée dans une unité d'accès ; et

exécuter le processus de gestion de mémoire DPB sur d'autres composants de couches décodées dans l'unité d'accès.

7.  Appareil configuré pour traiter des données vidéo, l'appareil comprenant :

un moyen de décodage de données vidéo pour produire une pluralité de composants de couches décodées, chaque composant de couche décodée étant d'un type, dans lequel les types de la pluralité de composants de couches décodées comportent au moins l'une d'une vue de texture de données vidéo multivue, d'une vue en profondeur de données vidéos multivue, d'une couche de base de données vidéo échelonnables, ou de chacune d'une ou de plusieurs couches de rehaussement de données vidéo échelonnables ; **caractérisé par**

un moyen de mémorisation de la pluralité de composants de couches décodées dans des sous-unités d'une mémoire tampon d'images décodées (DPB) de telle sorte qu'un type différent de composant de couche décodée soit mémorisé dans chaque sous-unité respective ; et

un moyen d'exécution d'un processus de gestion de mémoire DPB sur les sous-unités, le processus de gestion de mémoire DPB étant géré indépendamment pour chacune des sous-unités.

8.  Appareil selon la revendication 7, dans lequel le processus de gestion de mémoire DPB comprend l'un ou plusieurs de la suppression d'un composant de couche décodée de la pluralité de composants de couches décodées de la sous-unité respective, ou du marquage d'un composant de couche décodée de la pluralité de composants de couches décodées dans la sous-unité respective comme étant inutilisé en référence.

9.  Appareil selon la revendication 8, dans lequel le moyen d'exécution du processus de gestion de mémoire DPB sur les sous-unités comprend :

un moyen d'exécution du processus de gestion de mémoire DPB sur un premier composant de couche décodée dans une unité d'accès ; et

un moyen d'exécution du processus de gestion de mémoire DPB sur d'autres composants de couches décodées dans l'unité d'accès.

**10.** Support de mémorisation lisible par ordinateur mémorisant des instructions qui, à leur exécution, amènent un ou plusieurs processeurs d'un dispositif configuré pour traiter des données vidéo à :

décoder des données vidéo pour produire une pluralité de composants de couches décodées, chaque composant de couche décodée étant d'un type, dans lequel les types de la pluralité de composants de couches décodées comportent au moins l'une d'une vue de texture de données vidéo multivue, d'une vue en profondeur de données vidéos multivue, d'une couche de base de données vidéo échelonnables, ou de chacune d'une ou de plusieurs couches de rehaussement de données vidéo échelonnables ; **caractérisé par**
la mémorisation de la pluralité de composants de couches décodées dans des sous-unités d'une mémoire tampon d'images décodées (DPB) de telle sorte qu'un type différent de composant de couche décodée soit mémorisé dans chaque sous-unité respective ; et
l'exécution d'un processus de gestion de mémoire DPB sur les sous-unités, le processus de gestion de mémoire DPB étant géré indépendamment pour chacune des sous-unités.

**11.** Support de mémorisation lisible par ordinateur selon la revendication 10, dans lequel le processus de gestion de mémoire DPB comprend l'un ou plusieurs de la suppression d'un composant de couche décodée de la pluralité de composants de couches décodées de la sous-unité, ou du marquage d'un composant de couche décodée de la pluralité de composants de couches décodées dans la sous-unité comme étant inutilisé en référence.

**12.** Support de mémorisation lisible par ordinateur selon la revendication 11, dans lequel les instructions amènent en outre les un ou plusieurs processeurs à :

exécuter le processus de gestion de mémoire DPB sur un premier composant de couche décodée dans une unité d'accès ; et
exécuter le processus de gestion de mémoire DPB sur d'autres composants de couches décodées dans l'unité d'accès.

10

SOURCE DEVICE
12

VIDEO SOURCE
18

VIDEO
ENCODER
20

OUTPUT
INTERFACE
22

STORAGE
DEVICE
34

DESTINATION DEVICE
14

DISPLAY DEVICE
32

VIDEO
DECODER
30

INPUT INTERFACE
28

16

FIG. 1

FIG. 2

EP 2 941 876 B1

**FIG. 3**

LAYER 0 : QCIF, 7.5HZ, 64KBPS

LAYER 1 : QCIF, 15HZ, 96KBPS

LAYER 2 : CIF, 15HZ, 256KBPS

LAYER 3 : QCIF, 7.5HZ, 512KBPS

LAYER 4 : 4CIF, 30HZ, 1.0MBPS

FIG. 4

FIG. 5

**FIG. 6**

EP 2 941 876 B1

DPB
700

710A  710B  710C  710D

EACH OF SUB-UNITS 710A-D INCLUDE THE
DECODED LAYER COMPONENTS OF ALL FULLY-
RECONSTRUCTED LAYERS WITHIN AN ACCESS UNIT

**FIG. 7**

DPB
800

810A
RESOLUTION 1

810C
RESOLUTION 3

810B
RESOLUTION 2

810D
RESOLUTION 4

**FIG. 8**

EP 2 941 876 B1

FIG. 9

EACH OF SUB-UNITS 1010A-D CORRESPOND TO A
DECODED LAYER COMPONENT HAVING THE
HIGHEST SPATIAL RESOLUTION

FIG. 10

```
┌─────────────────────────────────────┐
│   DECODE VIDEO DATA TO PRODUCE A     │
│   PLURALITY OF DECODED LAYER         │──1100
│   COMPONENTS                         │
└─────────────────────────────────────┘
                  │
                  ▼
┌─────────────────────────────────────┐
│   STORE THE DECODED LAYER            │
│   COMPONENTS IN ONE OR MORE SUB-     │──1110
│   UNITS OF A DPB                     │
└─────────────────────────────────────┘
                  │
                  ▼
┌─────────────────────────────────────┐
│  PERFORM A DPB MANAGEMENT PROCESS    │
│  ON THE ONE OR MORE SUB-UNITS,       │
│  WHEREIN THE DPB MANAGEMENT          │──1120
│  PROCESS IS MANAGED SEPARATELY FOR   │
│  EACH OF THE ONE OR MORE SUB-UNITS   │
└─────────────────────────────────────┘
```

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008084443 A

### Non-patent literature cited in the description

- High Efficiency Video Coding (HEVC) text specification draft 9. *11th Meeting,* 10 October 2012
- High Efficiency Video Coding. *Infrastructure of Audiovisual Services-Coding of Moving Video,* April 2013
- High Efficiency Video Coding (HEVC) Range Extensions text specification: Draft 4. *JCTVC-N1005_v1,* April 2013
- High efficiency video coding (HEVC) scalable extension draft 3. *Joint Collaborative Team on Video Coding (JCT-VC) of ITU-T SG 16 WP 3 and ISO/IEC JTC 1/SC 29/WG 11, 14th Meeting,* 25 July 2013
- **T. SUZUKI ; M. M. HANNUKSELA ; Y. CHEN ; S. HATTORI ; G. SULLIVAN.** MVC Extension for Inclusion of Depth Maps Draft Text 6. *JCT3V-C1001, Joint Collaborative Team on 3D Video Coding Extension Development of ITU-T SG 16 WP 3 and ISO/IEC JTC 1/SC 29/WG 11, 4th meeting, http://phenix.int-evry.fr/jct2/doc_end_user/documents/3_Geneva/wg11/JCT3V-C1001-v3.zip*
- **M. M. HANNUKSELA ; Y. CHEN ; T. SUZUKI ; J.-R. OHM ; G. SULLIVAN.** 3D-AVC Draft Text 8. *JCT3V-F1002, Joint Collaborative Team on 3D Video Coding Extension Development of ITU-T SG 16 WP 3 and ISO/IEC JTC 1/SC 29/WG 11, 6th Meeting, http://phenix.int-evry.fr/jct2/doc_end_user/documents/6_Geneva/wg11/JCT3V-F1002-v3.zip*
- **G. TECH ; K. WEGNER ; Y. CHEN ; M. HANNUKSELA.** MV-HEVC Draft Text 6. *Joint Collaborative Team on 3D Video Coding Extension Development of ITU-T SG 16 WP 3 and ISO/IEC JTC 1/SC 29/WG 11, 6th Meeting, http://phenix.int-evry.fr/jct2/doc_end_user/documents/6_Geneva/wg11/JCT3V-F1004-v6.zip*
- **GERHARD TECH ; KRZYSZTOF WEGNER ; YING CHEN ; SEHOON YEA.** 3D-HEVC Draft Text 2. *JCT3V-F1001, Joint Collaborative Team on 3D Video Coding Extension Development of ITU-T SG 16 WP 3 and ISO/IEC JTC 1/SC 29/WG 11, 6th Meeting, http://phenix.int-evry.fr/jct2/doc_end_user/documents/6_Geneva/wg11/JCT3V-F1001-v2*